# EUROPEAN PATENT APPLICATION

(11) **EP 4 819 692 A1**
(43) Date of publication of application: **07.10.2026**
(21) Application number: 24905911.4
(22) Date of filing: 08.11.2024
(51) Int. Cl.: H04W 48/08

(54) **COMMUNICATION METHOD AND RELATED DEVICE**

(30) Priority: 21.12.2023 CN 202311782224
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN)
(74) Representative: Huawei European IPR
(86) International application number: PCT/CN2024/130798
(87) International publication number: WO 2025/130424

(57) **Abstract**

This application provides a communication method and related devices. The method includes: receiving a first request message, where the first request message is used to request access of a terminal device to a target network; determining, based on identification information of the terminal device, that subscription data of the terminal device does not belong to the target network, and there is no external authentication protocol between a home network of the terminal device and the target network; determining context information of the terminal device, where the context information includes first indication information, and the first indication information is used to indicate that the terminal device accesses the target network without authentication; and sending a first response message to the terminal device, where the first response message is used to indicate that the terminal device is allowed to access the target network. The method may allow the terminal device to access the target network to obtain some services provided by the target network when the subscription data of the terminal device does not belong to the target network and there is no external authentication protocol between the home network of the terminal device and the target network.

## Description

This application claims priority to Chinese Patent Application No. 202311782224.8, filed with the China National Intellectual Property Administration on December 21, 2023 and entitled "COMMUNICATION METHOD AND RELATED DEVICES", which is incorporated herein by reference in its entirety.

### TECHNICAL FIELD

This application relates to the communication field, and more specifically, to a communication method, a communication apparatus, a communication system, a computer-readable storage medium, and a chip.

### BACKGROUND

A non-public network (non-public network, NPN) is a network that provides services for specific users, which is different from a public network. An NPN may include a standalone NPN (standalone NPN, SNPN) and a non-standalone NPN (public network integrated NPN, PNI-NPN). The SNPN does not depend on a public land mobile network (public land mobile network, PLMN), but is independently operated by an SNPN operator. The PNI-NPN depends on a PLMN and is operated by a traditional operator. In conventional technologies, there are three ways for a terminal device to access a target network to obtain a service. In the first way, the subscription data of the terminal device belongs to the target network, and in this case, the terminal device directly registers with and accesses the target network. In the second way, there is an external authentication protocol between the home network of the terminal device and the target network, and in this case, the terminal device accesses the target network through an external authentication manner. In the third way, when the subscription data of the terminal device does not belong to the target network, and there is no external authentication protocol between the home network of the terminal device and the target network, the terminal device accesses the target network through an emergency registration manner. In this case, the terminal device can only obtain emergency services, for example, making an emergency call. Therefore, when the subscription data of the terminal device does not belong to the target network, and there is no external authentication protocol between the home network of the terminal device and the target network, the terminal device cannot access the target network, or cannot obtain other services provided by the target network except the emergency services, for example, browsing goods sold in a shopping mall or browsing service information provided in the shopping mall.

Therefore, how to allow a terminal device to access a target network to obtain a service provided by the target network when the subscription data of the terminal device does not belong to the target network and there is no external authentication protocol between the home network of the terminal device and the target network becomes an urgent problem to be resolved.

### SUMMARY

This application provides a communication method, a communication apparatus, a communication system, a computer-readable storage medium, and a chip, so that when the subscription data of a terminal device does not belong to a target network and there is no external authentication protocol between the home network of the terminal device and the target network, the terminal device is allowed to access the target network, thereby obtaining a service provided by the target network.

According to a first aspect, a communication method is provided. The method is performed by an access and mobility management device, and the method includes: receiving a first request message from a terminal device; determining, based on identification information of the terminal device, that subscription data of the terminal device does not belong to a target network and there is no external authentication protocol between the home network of the terminal device and the target network; determining context information of the terminal device; and sending a first response message to the terminal device, where the first response message is used to indicate that the terminal device is allowed to access the target network.

The first request message includes identification information of the terminal device, and the first request message is used to request the terminal device to access the target network. The context information of the terminal device includes first indication information, and the first indication information is used to indicate that the terminal device accesses the target network without authentication.

In this embodiment of this application, when the subscription data of the terminal device does not belong to the target network, and there is no external authentication protocol between the home network of the terminal device and the target network, the access and mobility management device determines the context information of the terminal device, and sets the first indication information in the context information, so as to indicate that the terminal device is allowed to access the target network without authentication, thereby obtaining some services provided by the target network.

With reference to the first aspect, in some implementations of the first aspect, when the first service exists in the target network, a first response message is sent. The first service is a service that is allowed to be obtained by the first terminal device in the target network. The subscription data of the first terminal device does not belong to the target network, and there is no external authentication protocol between the home network of the first terminal device and the target network. Alternatively, when the first service does not exist in the target network, a second response message is sent, where the second response message is used to indicate that the terminal device is not allowed to access the target network.

In this embodiment of this application, the access and mobility management device may determine, based on whether there is a service that is allowed to be obtained by the first terminal device in the target network, whether to allow the terminal device to access the target network. When there is a service that is allowed to be obtained by the first terminal device in the target network, the access and mobility management device may allow the terminal device to access the target network without authentication.

With reference to the first aspect, in some implementations of the first aspect, when a time at which the first request message is received belongs to the target time period, the first response message is sent. The target time period includes a time at which the first service in the target network is allowed to be obtained. The first service is a service that is allowed to be obtained by the first terminal device in the target network. The subscription data of the first terminal device does not belong to the target network, and there is no external authentication protocol between the home network of the first terminal device and the target network. Alternatively, when the time at which the first request message is received does not belong to the target time period, a second response message is sent, where the second response message is used to indicate that the terminal device is not allowed to access the target network.

In this embodiment of this application, the access and mobility management device may determine, based on whether a time at which the first request message is received falls within the time period during which the first service is allowed to be obtained, whether to allow the terminal device to access the target network. When the time at which the first request message is received falls within the time period during which the first service is allowed to be obtained, the access and mobility management device may allow the terminal device to access the target network without authentication.

With reference to the first aspect, in some implementations of the first aspect, the first response message further includes a session parameter available to the terminal device and/or first indication information, where the session parameter is used by the terminal device to request to obtain a service provided by the target network.

In this embodiment of this application, the access and mobility management device may send the first indication information and/or the session parameter available to the terminal device to the terminal device by using the first response message, so as to facilitate establishment of a session for the terminal device.

With reference to the first aspect, in some implementations of the first aspect, the method further includes: sending a second request message to a session management device. The second request message is used to request to establish a first session for the terminal device, where the first session is used by the terminal device to obtain a second service. The second service is a service that is allowed to be obtained by the first terminal device in the target network. The second request message includes the first indication information. The subscription data of the first terminal device does not belong to the target network, and there is no external authentication protocol between the home network of the first terminal device and the target network.

For example, the first service includes at least one service, and the at least one service includes the second service.

In this embodiment of this application, the access and mobility management device may send a second request message to the session management device, to request to establish a session for the terminal device. By adding the first indication information to the second request message, the session management device may determine the type of the terminal device, so that when establishing the session for the terminal device, the session management device may limit a quality of service (quality of service, QoS) requirement for the session, for example, limit a relatively low bandwidth of the session, or limit a relatively high packet loss rate or a relatively high delay of the session, thereby reducing resources occupied by the terminal device.

With reference to the first aspect, in some implementations of the first aspect, the method further includes: receiving a third request message, where the third request message is used to request to establish a first session for the terminal device; and when a session parameter available to the terminal device corresponds to the second service, sending a second request message to the session management device, where the session parameter is used by the terminal device to request to obtain a service provided by the target network; and when the session parameter available to the terminal device does not correspond to the second service, sending a third response message to the terminal device, where the third response message is used to indicate that the first session cannot be established for the terminal device.

In this embodiment of this application, the access and mobility management device may determine, based on whether the session parameter available to the terminal device corresponds to the service that is allowed to be obtained by the first terminal device, whether to establish a session for the terminal device, thereby restricting the terminal device, and preventing the terminal device from obtaining a service that is not allowed to be obtained.

With reference to the first aspect, in some implementations of the first aspect, the second request message further includes the session parameter available to the terminal device, and/or the third request message includes the first indication information and/or the session parameter available to the terminal device.

In this embodiment of this application, the terminal device may directly send the third request message that includes the first indication information and/or the available session parameter, and the access and mobility management device may send the third request message to the session management device as the second request message. Alternatively, the third request message sent by the terminal device does not include the first indication information, and the access and mobility management device may determine the first indication information based on the context information of the terminal device, so as to add the first indication information to the third request message to generate the second request message, and send the second request message to the session management device. Alternatively, the third request message sent by the terminal device does not include the available session parameter, and the access and mobility management device may add the available session parameter to the third request message to generate the second request message, and send the second request message to the session management device. Alternatively, the third request message sent by the terminal device does not include the first indication information and the available session parameter, and the access and mobility management device may add the first indication information and the available session parameter to the third request message to generate the second request message, and send the second request message to the session management device.

According to a second aspect, a communication method is provided. The method is performed by a session management device, and the method includes: receiving a second request message from an access and mobility management device, where the second request message is used to request to establish a first session for a terminal device, the first session is used by the terminal device to obtain a second service, the second service belongs to a service that is allowed to be obtained by a first terminal device in a target network, the second request message includes first indication information, the first indication information is used to indicate that the terminal device accesses the target network without being authenticated, the subscription data of the terminal device and the first terminal device does not belong to the target network, and there is no external authentication protocol between the home network of the terminal device and the first terminal device and the target network; and establishing the first session for the terminal device based on the second request message.

In this embodiment of this application, when the subscription data of the terminal device does not belong to the target network and there is no external authentication protocol between the home network of the terminal device and the target network, the session management device may establish a session for the terminal device based on the first indication information in the second request message, so that the terminal device is allowed to access the target network without being authenticated and obtain some services provided by the target network.

With reference to the second aspect, in some implementations of the second aspect, the second request message further includes a session parameter available to the terminal device, where the session parameter is used by the terminal device to request to obtain a service provided by the target network.

In this embodiment of this application, the session management device may establish a session for the terminal device based on the session parameter available to the terminal device that is included in the second request message.

With reference to the second aspect, in some implementations of the second aspect, when the session parameter available to the terminal device corresponds to the second service, the first session is established for the terminal device; or when the session parameter available to the terminal device does not correspond to the second service, a fourth response message is sent, where the fourth response message is used to indicate that the first session cannot be established for the terminal device.

In this embodiment of this application, the session management device may determine, based on whether the session parameter available to the terminal device corresponds to the service that is allowed to be obtained by the first terminal device, whether to establish a session for the terminal device, thereby restricting the terminal device, and preventing the terminal device from obtaining a service that is not allowed to be obtained.

With reference to the second aspect, in some implementations of the second aspect, the fourth response message includes the session parameter corresponding to the second service.

In this embodiment of this application, although the session management device refuses to establish a session for the terminal device, the session management device may send, to the access and mobility management device, the fourth response message that includes the session parameter corresponding to the second service, so that a correct session parameter can be used when a session is subsequently established for the terminal device.

With reference to the second aspect, in some implementations of the second aspect, the first session is established for the terminal device based on the first QoS information. The first QoS information is used to indicate a QoS requirement of the first session, and the QoS requirement of the first session is lower than the QoS requirement corresponding to the second service obtained by the second terminal device. The subscription data of the second terminal device belongs to the target network, or there is an external authentication protocol between the home network of the second terminal device and the target network.

In this embodiment of this application, the session management device may establish the first session for the terminal device, and the QoS requirement of the first session is lower than the QoS requirement corresponding to the second service obtained by the second terminal device, so as to limit the session corresponding to the terminal device, thereby avoiding a situation in which the terminal device occupies a relatively large quantity of resources.

With reference to the second aspect, in some implementations of the second aspect, the fourth request message is sent to the policy management device, where the fourth request message is used to request the first policy information, and the fourth request message includes the first indication information; and the first policy information is received from the policy management device, where the first policy information is used to generate the first QoS information.

In this embodiment of this application, the session management device may send a request message including the first indication information to the policy management device, so as to obtain the first policy information, and then establish a session for the terminal device based on the first policy information.

According to a third aspect, a communication method is provided. The method is performed by an access network device, and the method includes: sending a first request message to an access and mobility management device, where the first request message includes identification information of a terminal device, and the first request message is used to request the terminal device to access a target network; and receiving a first response message from the access and mobility management device, where the first response message is used to indicate that the terminal device is allowed to access the target network. The subscription data of the terminal device does not belong to the target network, and there is no external authentication protocol between the home network of the terminal device and the target network.

In this embodiment of this application, when the subscription data of the terminal device does not belong to the target network, and there is no external authentication protocol between the home network of the terminal device and the target network, the access and mobility management device may send the first response message to the access network device, so as to indicate that the terminal device is allowed to access the target network to obtain some services provided by the target network.

With reference to the third aspect, in some implementations of the third aspect, the first response message includes first indication information, where the first indication information is used to indicate that the terminal device accesses the target network without authentication.

In this embodiment of this application, when the subscription data of the terminal device does not belong to the target network, and there is no external authentication protocol between the home network of the terminal device and the target network, the access and mobility management device may send the first indication information to the access network device, so as to indicate that the terminal device is allowed to access the target network without authentication.

With reference to the third aspect, in some implementations of the third aspect, the method further includes: receiving a fifth request message from the access and mobility management device; and allocating a first access network (access network, AN) resource to the terminal device based on the first indication information and the information about the first session.

The fifth request message includes information about the first session. The first session is used by the terminal device to obtain a second service, where the second service belongs to a service that is allowed to be obtained by the first terminal device in the target network. The subscription data of the first terminal device does not belong to the target network, and there is no external authentication protocol between the home network of the first terminal device and the target network. The first AN resource is less than the AN resource corresponding to the second terminal device, and the first AN resource includes a physical resource and/or a logical resource corresponding to the terminal device. The subscription data of the second terminal device belongs to the target network, or there is an external authentication protocol between the home network of the second terminal device and the target network.

In this embodiment of this application, the access network device allocates the first AN resource to the terminal device based on the first indication information, so as to restrict the terminal device, thereby avoiding resource occupation by the terminal device.

With reference to the third aspect, in some implementations of the third aspect, the fifth request message further includes the first indication information.

In this embodiment of this application, the access network device may obtain the first indication information through the first response message, or may obtain the first indication information through the fifth request message, so as to allocate fewer resources to the terminal device based on the first indication information.

With reference to the third aspect, in some implementations of the third aspect, the first response message further includes a session parameter available to the terminal device, where the session parameter is used by the terminal device to request to obtain a service provided by the target network.

With reference to the third aspect, in some implementations of the third aspect, the session parameter available to the terminal device is sent to the terminal device, where the session parameter is used by the terminal device to request to obtain a service provided by the target network.

In this embodiment of this application, the access network device may send the first response message to the terminal device, so that the terminal device obtains the first indication information and/or the session parameter available.

According to a fourth aspect, a communication method is provided. The method is performed by a terminal device, and the method includes: sending a first request message to an access network device, where the first request message includes identification information of the terminal device, and the first request message is used to request the terminal device to access a target network; and receiving a first response message from the access network device, where the first response message is used to indicate that the terminal device is allowed to access the target network, subscription data of the terminal device does not belong to the target network, and there is no external authentication protocol between a home network of the terminal device and the target network.

In this embodiment of this application, when the subscription data of the terminal device does not belong to the target network, and there is no external authentication protocol between the home network of the terminal device and the target network, the access and mobility management device sends the first response message to the terminal device, so as to indicate that the terminal device is allowed to access the target network to obtain some services provided by the target network.

With reference to the fourth aspect, in some implementations of the fourth aspect, the first response message includes first indication information, where the first indication information is used to indicate that the terminal device accesses the target network without authentication.

In this embodiment of this application, when the subscription data of the terminal device does not belong to the target network, and there is no external authentication protocol between the home network of the terminal device and the target network, the access and mobility management device may send the first indication information to the terminal device, so as to indicate that the terminal device is allowed to access the target network without authentication.

With reference to the fourth aspect, in some implementations of the fourth aspect, the method further includes: sending a third request message to the access network device, where the third request message is used to request to establish a first session for the terminal device, the first session is used by the terminal device to obtain a second service, the second service belongs to a service that is allowed to be obtained by a first terminal device in the target network, the subscription data of the first terminal device does not belong to the target network, there is no external authentication protocol between the home network of the first terminal device and the target network, and the third request message includes the first indication information.

In this embodiment of this application, the terminal device may send a request message including the first indication information to the access network device, to request to establish a session for obtaining a service provided by the target network.

With reference to the fourth aspect, in some implementations of the fourth aspect, the second service is obtained through the first session, where a quality of service QoS requirement of the first session is lower than a QoS requirement corresponding to the second service obtained by the second terminal device, subscription data of the second terminal device belongs to the target network, or there is an external authentication protocol between the home network of the second terminal device and the target network.

In this embodiment of this application, the terminal device may obtain the second service through the first session with a relatively low QoS requirement, thereby limiting a session of the terminal device, and avoiding that the terminal device occupies a relatively large quantity of resources.

With reference to the fourth aspect, in some implementations of the fourth aspect, data is transmitted to the access network device by using the first AN resource, where the first AN resource is lower than an AN resource corresponding to the second terminal device, the first AN resource includes a physical resource and/or a logical resource corresponding to the terminal device, subscription data of the second terminal device belongs to the target network, or there is an external authentication protocol between the home network of the second terminal device and the target network.

In this embodiment of this application, the terminal device transmits data to the access network device by using a relatively small quantity of AN resources, thereby limiting a session of the terminal device, and avoiding a situation in which the terminal device occupies a relatively large quantity of resources.

With reference to the fourth aspect, in some implementations of the fourth aspect, the first response message further includes a session parameter available to the terminal device, and/or the third request message further includes a session parameter available to the terminal device, where the session parameter is used by the terminal device to request to obtain a service provided by the target network.

In this embodiment of this application, the terminal device may obtain an available session parameter, so that the available session parameter is carried in the session establishment request, thereby facilitating a request for establishing a session.

According to a fifth aspect, a communication apparatus is provided. The communication apparatus is applied to an access and mobility management device. The apparatus includes: a transceiver module, configured to receive a first request message from a terminal device; a processing module, configured to determine, based on the identification information of the terminal device, that subscription data of the terminal device does not belong to a target network, and there is no external authentication protocol between a home network of the terminal device and the target network; the processing module is further configured to determine context information of the terminal device; and the transceiver module is further configured to send a first response message to the terminal device, where the first response message is used to indicate that the terminal device is allowed to access the target network.

The first request message includes identification information of the terminal device, and the first request message is used to request the terminal device to access the target network. The context information of the terminal device includes first indication information, and the first indication information is used to indicate that the terminal device accesses the target network without authentication.

In this embodiment of this application, when the subscription data of the terminal device does not belong to the target network, and there is no external authentication protocol between the home network of the terminal device and the target network, the communication apparatus determines the context information of the terminal device, and sets the first indication information in the context information, so as to indicate that the terminal device is allowed to access the target network without authentication, thereby obtaining some services provided by the target network.

With reference to the fifth aspect, in some implementations of the fifth aspect, the transceiver module is specifically configured to send a first response message when the first service exists in the target network. The first service is a service that is allowed to be obtained by the first terminal device in the target network. The subscription data of the first terminal device does not belong to the target network, and there is no external authentication protocol between the home network of the first terminal device and the target network. Alternatively, the transceiver module is specifically configured to send a second response message when the first service does not exist in the target network, where the second response message is used to indicate that the terminal device is not allowed to access the target network.

With reference to the fifth aspect, in some implementations of the fifth aspect, the transceiver module is specifically configured to send the first response message when the time at which the first request message is received belongs to the target time period, where the target time period includes a time at which the first service in the target network is allowed to be obtained. The first service is a service that is allowed to be obtained by the first terminal device in the target network. The subscription data of the first terminal device does not belong to the target network, and there is no external authentication protocol between the home network of the first terminal device and the target network. Alternatively, the transceiver module is specifically configured to send the second response message when the time at which the first request message is received does not belong to the target time period, where the second response message is used to indicate that the terminal device is not allowed to access the target network.

With reference to the fifth aspect, in some implementations of the fifth aspect, the first response message further includes a session parameter available to the terminal device and/or first indication information, where the session parameter is used by the terminal device to request to obtain a service provided by the target network.

With reference to the fifth aspect, in some implementations of the fifth aspect, the transceiver module is further configured to send a second request message to the session management device. The second request message is used to request to establish a first session for the terminal device, and the first session is used by the terminal device to obtain a second service, where the second service belongs to a service that is allowed to be obtained by the first terminal device in the target network. The second request message includes first indication information. The subscription data of the first terminal device does not belong to the target network, and there is no external authentication protocol between the home network of the first terminal device and the target network.

For example, the first service includes at least one service, and the at least one service includes the second service.

With reference to the fifth aspect, in some implementations of the fifth aspect, the transceiver module is further configured to: receive a third request message, where the third request message is used to request to establish a first session for the terminal device; and when a session parameter available to the terminal device corresponds to the second service, send a second request message to the session management device, where the session parameter is used by the terminal device to request to obtain a service provided by the target network; or when a session parameter available to the terminal device does not correspond to the second service, send a third response message to the terminal device, where the third response message is used to indicate that the first session cannot be established for the terminal device.

With reference to the fifth aspect, in some implementations of the fifth aspect, the second request message further includes a session parameter available to the terminal device, and/or the third request message includes the first indication information and/or the session parameter available to the terminal device.

According to a sixth aspect, a communication apparatus is provided. The communication apparatus is applied to a session management device, and the apparatus includes: a transceiver module, configured to receive a second request message from an access and mobility management device, where the second request message is used to request to establish a first session for a terminal device, the first session is used by the terminal device to obtain a second service, the second service belongs to a service that is allowed to be obtained by a first terminal device in a target network, the second request message includes first indication information, the first indication information is used to indicate that the terminal device accesses the target network without authentication, the subscription data of the terminal device and the first terminal device does not belong to the target network, and there is no external authentication protocol between the home networks of the terminal device and the first terminal device and the target network; and a processing module, configured to establish the first session for the terminal device based on the second request message.

In this embodiment of this application, when the subscription data of the terminal device does not belong to the target network, and there is no external authentication protocol between the home network of the terminal device and the target network, the communication apparatus may establish a session for the terminal device based on the first indication information in the second request message, so that the terminal device is allowed to access the target network and obtain some services provided by the target network without authentication.

With reference to the sixth aspect, in some implementations of the sixth aspect, the second request message further includes a session parameter available to the terminal device, where the session parameter is used by the terminal device to request to obtain a service provided by the target network.

With reference to the sixth aspect, in some implementations of the sixth aspect, the processing module is further configured to establish the first session for the terminal device when the session parameter available to the terminal device corresponds to the second service. The transceiver module is further configured to send a fourth response message when the session parameter available to the terminal device does not correspond to the second service, where the fourth response message is used to indicate that the first session cannot be established for the terminal device.

With reference to the sixth aspect, in some implementations of the sixth aspect, the fourth response message includes the session parameter corresponding to the second service.

With reference to the sixth aspect, in some implementations of the sixth aspect, the processing module is further configured to establish a first session for the terminal device based on the first QoS information, where the first QoS information is used to indicate a QoS requirement of the first session, and the QoS requirement of the first session is lower than the QoS requirement corresponding to the second service obtained by the second terminal device. The subscription data of the second terminal device belongs to the target network, or there is an external authentication protocol between the home network of the second terminal device and the target network.

With reference to the sixth aspect, in some implementations of the sixth aspect, the transceiver module is specifically configured to: send a fourth request message to the policy management device, where the fourth request message is used to request the first policy information, and the fourth request message includes the first indication information; and receive the first policy information from the policy management device, where the first policy information is used to generate the first QoS information.

According to a seventh aspect, a communication apparatus is provided. The communication apparatus is applied to an access network device, and the apparatus includes: a sending module, configured to send a first request message to an access and mobility management device, where the first request message includes identification information of a terminal device, and the first request message is used to request the terminal device to access a target network; and a receiving module, configured to receive a first response message from the access and mobility management device, where the first response message is used to indicate that the terminal device is allowed to access the target network, the subscription data of the terminal device does not belong to the target network, and there is no external authentication protocol between the home network of the terminal device and the target network.

In the embodiments of this application, when the subscription data of the terminal device does not belong to the target network, and there is no external authentication protocol between the home network of the terminal device and the target network, the access and mobility management device may send the first response message to the communication apparatus, thereby indicating that the terminal device is allowed to access the target network to obtain some services provided by the target network.

With reference to the seventh aspect, in some implementations of the seventh aspect, the first response message includes first indication information, and the first indication information is used to indicate that the terminal device accesses the target network without authentication.

With reference to the seventh aspect, in some implementations of the seventh aspect, the apparatus further includes a processing module, where the receiving module is further configured to receive a fifth request message from the access and mobility management device; and the processing module is configured to allocate the first AN resource to the terminal device based on the first indication information and the information about the first session.

The fifth request message includes the information about the first session. The first session is used by the terminal device to obtain a second service, and the second service belongs to a service that is allowed to be obtained by the first terminal device in the target network. The subscription data of the first terminal device does not belong to the target network, and there is no external authentication protocol between the home network of the first terminal device and the target network. The first AN resource is less than an AN resource corresponding to the second terminal device, and the first AN resource includes a physical resource and/or a logical resource corresponding to the terminal device. The subscription data of the second terminal device belongs to the target network, or there is an external authentication protocol between the home network of the second terminal device and the target network.

With reference to the seventh aspect, in some implementations of the seventh aspect, the fifth request message further includes the first indication information.

With reference to the seventh aspect, in some implementations of the seventh aspect, the first response message further includes a session parameter available to the terminal device, where the session parameter is used by the terminal device to request to obtain a service provided by the target network.

With reference to the seventh aspect, in some implementations of the seventh aspect, the sending module is further configured to send the first indication information and/or a session parameter available to the terminal device to the terminal device, where the session parameter is used by the terminal device to request to obtain a service provided by the target network.

According to an eighth aspect, a communication apparatus is provided. The communication apparatus is applied to a terminal device, and the apparatus includes: a sending module, configured to send a first request message to an access network device, where the first request message includes identification information of the communication apparatus, and the first request message is used to request access of the communication apparatus to a target network; and a receiving module, configured to receive a first response message from the access network device, where the first response message is used to indicate that access of the communication apparatus to the target network is allowed, subscription data of the communication apparatus does not belong to the target network, and there is no external authentication protocol between a home network of the communication apparatus and the target network.

In this embodiment of this application, when the subscription data of the communication apparatus does not belong to the target network, and there is no external authentication protocol between the home network of the communication apparatus and the target network, the access and mobility management device sends the first response message to the communication apparatus, so as to indicate that the communication apparatus is allowed to access the target network to obtain some services provided by the target network.

With reference to the eighth aspect, in some implementations of the eighth aspect, the first response message includes first indication information, and the first indication information is used to indicate that the communication apparatus accesses the target network without authentication.

With reference to the eighth aspect, in some implementations of the eighth aspect, the sending module is further configured to send a third request message to the access network device, where the third request message is used to request to establish a first session for the communication apparatus, the first session is used by the communication apparatus to obtain a second service, the second service belongs to a service that is allowed to be obtained by the first terminal device in the target network, the subscription data of the first terminal device does not belong to the target network, there is no external authentication protocol between the home network of the first terminal device and the target network, and the third request message includes the first indication information.

With reference to the eighth aspect, in some implementations of the eighth aspect, the apparatus further includes a processing module, where the processing module is configured to obtain the second service through the first session, where a quality of service QoS requirement of the first session is lower than a QoS requirement corresponding to the second service obtained by the second terminal device, subscription data of the second terminal device belongs to the target network, or there is an external authentication protocol between a home network of the second terminal device and the target network.

With reference to the eighth aspect, in some implementations of the eighth aspect, the apparatus further includes a processing module, where the processing module is configured to transmit data to the access network device by using the first AN resource, where the first AN resource is lower than an AN resource corresponding to the second terminal device, the first AN resource includes a physical resource and/or a logical resource corresponding to the communication apparatus, subscription data of the second terminal device belongs to the target network, or there is an external authentication protocol between a home network of the second terminal device and the target network.

With reference to the eighth aspect, in some implementations of the eighth aspect, the first response message further includes a session parameter available to the communication apparatus, and/or the third request message further includes a session parameter available to the communication apparatus, where the session parameter is used by the communication apparatus to request to obtain a service provided by the target network.

According to a ninth aspect, a communication apparatus is provided. The communication apparatus includes at least one processor and a communication interface, where the communication interface is configured to exchange information between the communication apparatus and another communication apparatus. When program instructions are executed by the at least one processor, the communication apparatus is enabled to perform the method according to any one of the first aspect or the possible implementations of the first aspect.

According to a tenth aspect, a communication apparatus is provided. The communication apparatus includes at least one processor and a communication interface, where the communication interface is configured to exchange information between the communication apparatus and another communication apparatus. When program instructions are executed by the at least one processor, the communication apparatus is enabled to perform the method according to any one of the second aspect or the possible implementations of the second aspect.

According to an eleventh aspect, a communication apparatus is provided. The communication apparatus includes at least one processor and a communication interface, where the communication interface is configured to exchange information between the communication apparatus and another communication apparatus. When program instructions are executed by the at least one processor, the communication apparatus is enabled to perform the method according to any one of the third aspect or the possible implementations of the third aspect.

According to a twelfth aspect, a communication apparatus is provided. The communication apparatus includes at least one processor and a communication interface, where the communication interface is configured to exchange information between the communication apparatus and another communication apparatus. When program instructions are executed by the at least one processor, the communication apparatus is enabled to perform the method according to any one of the fourth aspect or the possible implementations of the fourth aspect.

According to a thirteenth aspect, a communication system is provided. The communication system includes the communication apparatus according to the ninth aspect, the communication apparatus according to the tenth aspect, the communication apparatus according to the eleventh aspect, and the communication apparatus according to the twelfth aspect.

According to a fourteenth aspect, a computer program product is provided. The computer program product includes program instructions, where when the computer program product is run on a computer, the computer is enabled to perform the method according to any one of the possible implementations of the first aspect, the second aspect, the third aspect, or the fourth aspect.

According to a fifteenth aspect, a computer-readable storage medium is provided. The computer-readable storage medium stores program code for a device to execute. When the program code is executed, the method according to any one of the possible implementations of any one of the first aspect, the second aspect, the third aspect, or the fourth aspect is performed.

According to a sixteenth aspect, a chip is provided. The chip includes at least one processor. When program instructions are executed by the at least one processor, the method according to any one of the possible implementations of any one of the first aspect, the second aspect, the third aspect, or the fourth aspect is performed.

### BRIEF DESCRIPTION OF DRAWINGS

FIG. 1 is a schematic block diagram of a communication system according to an embodiment of this application;
FIG. 2 is a schematic block diagram of a communication system according to another embodiment of this application;
FIG. 3 is a schematic block diagram of a communication system according to another embodiment of this application;
FIG. 4 is a schematic flowchart of a registration method for a terminal device;
FIG. 5 is a schematic flowchart of a session establishment method for a terminal device;
FIG. 6 is a schematic flowchart of a communication method according to an embodiment of this application;
FIG. 7 is a schematic flowchart of a communication method according to another embodiment of this application.
FIG. 8 is a schematic flowchart of a communication method according to another embodiment of this application.
FIG. 9 is a schematic flowchart of a communication method according to another embodiment of this application.
FIG. 10 is a schematic structural diagram of a communication apparatus 1000 according to an embodiment of this application.
FIG. 11 is a schematic structural block diagram of a communication apparatus 1100 according to an embodiment of this application.

### DESCRIPTION OF EMBODIMENTS

The technical solutions in this application are described below with reference to the accompanying drawings.

Embodiments of this application present various aspects, embodiments, or features in terms of a system including multiple devices, components, modules, and the like. It should be understood and appreciated that each system may include other devices, components, modules, and the like, and/or may not include all devices, components, modules, and the like discussed with reference to the accompanying drawings. In addition, combinations of these solutions may also be used.

In addition, in embodiments of this application, terms such as "example" or "for example" are used to represent an instance, an illustration, or a description. Any embodiment or design scheme described as an "example" in embodiments of this application should not be construed as being more preferred or having more advantages than another embodiment or design scheme. To the contrary, the use of the term "example" is intended to present a concept in a concrete manner.

The service scenarios described in embodiments of this application are intended to describe the technical solutions in embodiments of this application more clearly, and do not constitute a limitation on the technical solutions provided in embodiments of this application. A person of ordinary skill in the art may know that, with the evolution of technologies and the emergence of new service scenarios, the technical solutions provided in embodiments of this application are also applicable to similar technical problems.

The use of terms such as "an embodiment" or "some embodiments" described in this specification means that one or more embodiments of this application include specific features, structures, or characteristics described in connection with these embodiments. Therefore, the statements "in one embodiment," "in some embodiments," "in other embodiments," "in other embodiments," and the like, which appear at different places in this specification, do not necessarily refer to the same embodiment, but instead mean "one or more but not all of the embodiments," unless otherwise specifically emphasized. The terms "include," "comprise," "have," and their variants all mean "include but not limited to," unless otherwise specifically emphasized.

In the embodiments of this application, "at least one" means one or more, and "a plurality of" means two or more. The term "and/or" describes an association relationship between associated objects, and indicates that three relationships may exist. For example, A and/or B may indicate the following three cases: only A exists, both A and B exist, and only B exists, where A and B may be singular or plural. The character "/" generally indicates an "or" relationship between the associated objects. "At least one of the following" or a similar expression thereof means any combination of these items, including any combination of singular or plural items. For example, "at least one of a, b, or c" may indicate: a, b, c, a-b, a-c, b-c, or a-b-c, where a, b, and c may be singular or multiple.

The technical solutions in the embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 4th generation (4th generation, 4G) system, a 5th generation (5th generation, 5G) system, a next generation wireless communication system or a new radio (new radio, NR) system, and the like. The technical solutions in the embodiments of this application may also be applied to various NPNs, for example, an SNPN or a PNI-NPN.

The terminal device in the embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides a user with voice/data connectivity, for example, a handheld device or a vehicle-mounted device with a wireless connection function. Currently, some examples of terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (PDA), a handheld device with a wireless communication function, a computing device, or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

By way of example and not limitation, in the embodiments of this application, the terminal device may also be a wearable device. A wearable device may also be referred to as a wearable smart device, which is a general term for devices developed through the application of wearable technology that intelligently designs daily wearables for use as wearable devices, such as glasses, gloves, watches, clothing, and shoes. Wearable devices are portable devices that are either worn directly on the body or integrated into the user's clothing or accessories. These devices are not merely hardware; they also achieve powerful functions through software support, data interaction, and cloud interaction. Broadly speaking, wearable smart devices include fully functional devices with large sizes that can perform complete or partial functions without relying on a smartphone, such as smartwatches or smart glasses, as well as devices that focus on a specific type of application function and need to work in conjunction with other devices, such as smartphones, such as various smart wristbands or smart jewelry for monitoring physiological signs.

In addition, in the embodiments of this application, the terminal device may also be a terminal device in an Internet of Things (IoT) system. IoT is an important component of future information technology development. Its main technical feature is the intelligent network that connects things through communication technologies and Internet connections, thereby achieving intelligent interconnection between humans and machines, and between things themselves.

In addition, the access network device in the embodiments of this application may be a transmission reception point (transmission reception point, TRP), may be an evolved NodeB (evolved NodeB, eNB, or eNodeB) in an LTE system, may be a home evolved NodeB (for example, home evolved NodeB, or home Node B, HNB), a baseband unit (base band unit, BBU), or a radio controller in a cloud radio access network (cloud radio access network, CRAN) scenario. Alternatively, the access network device may be a relay station, an access point, a vehicle-mounted device, a wearable device, an access network device in a 5G network, an access network device in a future evolved public land mobile network (public land mobile network, PLMN), or the like. The access network device may be an access point (access point, AP) in a WLAN, or may be a gNB in a new radio (new radio, NR) system. This is not limited in embodiments of this application. In a network architecture, the access network device may include a centralized unit (centralized unit, CU) node, a distributed unit (distributed unit, DU) node, a radio access network (radio access network, RAN) device that includes a CU node and a DU node, or a RAN device that includes a control plane CU node (CU-CP node), a user plane CU node (CU-UP node), and a DU node.

In the embodiments of this application, the terminal device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as main memory). The operating system may be any one or more computer operating systems that implement service processing through processes (process), for example, a Linux operating system, a Unix operating system, an Android operating system, an iOS operating system, or a Windows operating system. The application layer includes applications such as a browser, an address book, word processing software, and instant messaging software. In addition, the embodiments of this application do not particularly limit a specific structure of an execution body of the method provided in the embodiments of this application, provided that a program that records code of the method provided in the embodiments of this application can be run to perform communication according to the method provided in the embodiments of this application. For example, the execution body of the method provided in the embodiments of this application may be a network device, or may be a functional module in the network device that can invoke a program and execute the program.

Additionally, the various aspects or features of this application may be implemented as a method, an apparatus, or a product that uses standard programming and/or engineering techniques. The term "product" as used in this application encompasses computer programs that may be accessed from any computer-readable device, carrier, or medium. For example, a computer-readable medium may include, but is not limited to, magnetic storage devices (e.g., hard disk, floppy disk, or magnetic tape, etc.), optical discs (e.g., compact disc (CD), digital versatile disc (DVD), etc.), smart cards, and flash memory devices (e.g., erasable programmable read-only memory (EPROM), card, stick, or key drive, etc.). In addition, the various storage media described herein may represent one or more devices and/or other machine-readable media used to store information. The term "machine-readable medium" may include, but is not limited to, wireless channels and various other media that are capable of storing, containing, and/or carrying instructions and/or data.

To facilitate understanding of the embodiments of this application, several terms used in this application are first briefly described.

### 1. SNPN

An SNPN does not depend on a PLMN, but is operated by an SNPN operator. In other words, a core network of the SNPN is independent of a PLMN network, that is, the core network of the SNPN is independently operated by the SNPN. When a terminal device needs to access an SNPN, the terminal device needs to enter an SNPN access mode (access mode).

### 2. PNI-NPN

A PNI-NPN network depends on a PLMN network and is operated by a traditional operator. In other words, the PNI-NPN is actually a PLMN, but the PLMN provides a special slice and/or data network to provide an NPN service, that is, not all terminal devices can obtain the NPN service, and only when a terminal device passes slice authentication and/or secondary authentication (an authentication procedure during session establishment) can the terminal device obtain the NPN service. Simply speaking, the PNI-NPN isolates public network services from private network services by using slices, thereby providing private network services for private network users.

### 3. External Authentication

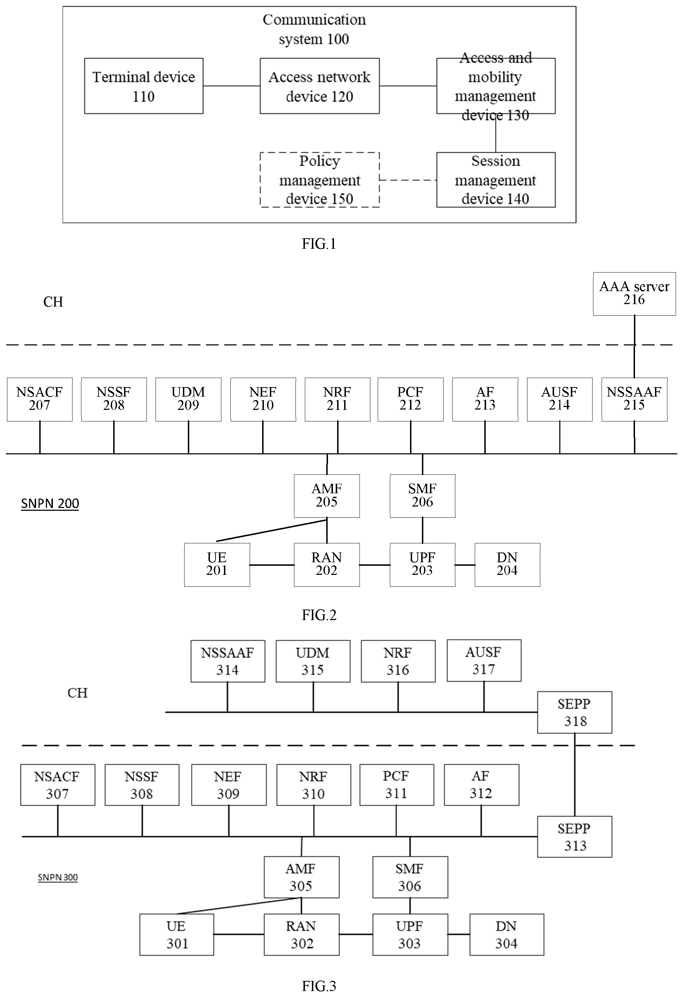

For an SNPN, the terminal device is allowed to use the credentials of the credentials holder to perform authentication and thereby access the SNPN. For example, for the SNPN shown in FIG. 2 or FIG. 3, the terminal device uses the credentials of the credentials holder to authenticate and access the SNPN. For instance, the credentials holder may be a PLMN, for example, the credentials holder is the home PLMN (HPLMN) of the terminal device, meaning that the terminal device itself has subscription data for the HPLMN. There is a corresponding external authentication protocol between the HPLMN of the terminal device and the SNPN, which allows the terminal device to access the SNPN using the subscription data of the HPLMN. In the case where the terminal device has the subscription data of the HPLMN and there is a corresponding external authentication protocol between the HPLMN of the terminal device and the SNPN, the terminal device may carry a subscription concealed identifier (SUCI) corresponding to the HPLMN subscription data when accessing the SNPN. The SNPN can then retrieve the HPLMN of the terminal device through the home network information in the SUCI, select the corresponding authentication server function (AUSF) network element or unified data management (UDM) network element to complete the authentication, thereby enabling the terminal device to successfully access the SNPN and obtain services.

### 4. Emergency services

Emergency services refer to the network supporting terminal devices in establishing emergency Internet Protocol (IP) multimedia subsystem (IMS) sessions. Emergency services can be obtained by a terminal device in a normal registration state or an emergency registration state, where the terminal device may be in a normal registration state or a state where it is restricted from obtaining services. When a terminal device performs emergency registration, during the registration procedure, the terminal device reports the registration type as emergency registration. At this time, the access and mobility management function (AMF) device may allow the terminal device to continue the registration procedure without performing primary authentication or when the primary authentication fails, thereby enabling the terminal device to access the network. In this case, the terminal device is only allowed to obtain emergency services, such as making an emergency call to 110 or other emergency sessions.

FIG. 1 is a schematic structural diagram of a communication system according to an embodiment of this application. The communication system 100 in FIG. 1 includes a terminal device 110, an access network device 120, an access and mobility management device 130, and a session management device 140. In some embodiments, the communication system 100 in FIG. 1 may further include a policy management device 150.

The access and mobility management device 130 and the session management device 140 belong to core network devices. For example, the terminal device 110 may access a target network by using the access network device 120, thereby implementing data transmission. The access and mobility management device 130 may receive a request for accessing the target network by the terminal device 110, which is forwarded from the access network device 120, and request the session management device 140 to establish, for the terminal device 110, a session for obtaining a service provided by the target network. The policy management device 150 may provide the session management device 140 with policy information corresponding to the session, so as to determine a quality of service requirement of the session.

The access network device 120 is configured to provide a network access function for authorized users in a specific area, and is capable of using transmission tunnels of different quality based on user levels, service requirements, and the like. The access network device 120, as an NE, can manage radio resources, provide access services for terminal devices, and thereby complete the forwarding of control signals and user data between the terminal device and the core network. The access network device 120 can also be understood as a base station in a conventional network. The interface between the access network device 120 and the access and mobility management device 130 is an N2 interface, and messages transmitted through this N2 interface are N2 messages.

The access and mobility management device 130 may also be referred to as an access and mobility management function (access and mobility management function, AMF) entity, an access and mobility management device, an access and mobility management network element, an access management device, or a mobility management device. The access and mobility management device 130 is a type of core network device, mainly used for mobility management, access management, and the like, and can be configured to implement other functions of a mobility management entity (mobility management entity, MME) except for session management. For example, the functions may include access authorization (or authentication), registration of user equipment, mobility management, tracking area update procedures, reachability detection, selection of a session management network element, and management of mobility state transitions. For instance, in 5G, the access and mobility management network element may be an access and mobility management function network element. In future communications, such as 6G, the access and mobility management network element may still be an AMF network element or may have another name, which is not limited in this application. When the access and mobility management network element is an AMF network element, the AMF may provide an Namf service.

The session management device 140 may also be referred to as a session management function (SMF) network element, which primarily performs session management, IP address allocation and management, selection of a manageable user plane function, termination of interfaces for policy control or charging functions, downlink data notification, and the like.

The policy management device 150 may also be referred to as a policy control function (PCF) network element, policy control network element, policy control function network element, policy control device, policy control function entity, or the like. It is mainly responsible for policy control functions such as charging, quality of service (QoS) bandwidth guarantee, mobility management, and UE policy decision-making at the session and service flow levels, providing a unified policy framework for network behavior management, providing policy rules for control plane functions, obtaining registration information related to policy decision-making, and the like.

FIG. 2 is a schematic architectural diagram of an SNPN architecture 200. The SNPN 200 in FIG. 2 includes a UE 201, a RAN 202, a user plane function (UPF) 203, a data network (DN) 204, an AMF 205, an SMF 206, a network slice admission control function (NSACF) 207, a network slice selection function (NSSF) 208, a unified data management function (UDM) 209, a network exposure function (NEF) 210, a network repository function (NRF) 211, a PCF 212, an application function (AF) 213, an AUSF 214, and a network slice-specific authentication and authorization function (NSSAAF) 215.

Herein, the UE 201 is similar to the terminal device 110 in FIG. 1, the RAN 202 is similar to the access network device 120 in FIG. 1, the AMF 205 is similar to the access and mobility management device 130 in FIG. 1, and the SMF 206 is similar to the session management device 140 in FIG. 1. The PCF 212 is similar to the policy management device 150 in FIG. 1.

The UPF 203 may also be referred to as a user plane device, a user plane function network element, a user plane network element, a user plane function entity. The UPF 203 mainly includes the following functions: packet routing and transmission, packet inspection, service usage reporting, QoS processing, lawful interception, uplink packet inspection, downlink data packet storage, and other user plane-related functions.

The DN 204 is configured to provide a network for transmitting data, such as an internet network.

The NSACF 207 is primarily used to monitor the number of UEs registered on each network slice and to monitor the number of protocol data unit (PDU) sessions established on each network slice.

The NSSF 208 is used for network slice selection.

The UDM 209 may also be referred to as a unified data management network element, unified data management entity, or data management device, and is a type of core network device. The UDM 209 is primarily used for processing terminal device identification, access authentication, registration, and mobility management.

The NEF 210 may also be referred to as a network exposure device, network exposure function entity, network exposure function network element, network capability exposure function entity, network capability exposure function device, network capability exposure function network element, network capability exposure device, or the like. It is mainly used to support the exposure of capabilities and events, such as securely exposing services and capabilities provided by 3rd Generation Partnership Project (3GPP) network functions to external entities.

The NRF 211 may also be referred to as a network repository function, network repository function network element, or network repository function entity, and is primarily used to support service discovery functions. It receives NF discovery requestss from a network function or a service communication proxy (SCP) and can provide feedback on the network exposure request information. Additionally, the NRF 211 is responsible for maintaining information about available network functions and the services they each support. The NRF 211 can also be understood as a network repository function. The discovery process involves a network function (NF) that needs the network function to address a specific NF or a specific service through the NRF, where the NRF provides the IP address or fully qualified domain name (FQDN) or uniform resource identifier (URI) of the corresponding NF instance or NF service instance. Furthermore, the NRF can also facilitate cross-PLMN discovery processes by providing network identifiers (e.g., PLMN identifiers). To achieve the addressing and discovery of network functions, each network function must be registered with the NRF, and some network functions can be registered with the NRF when they are first operational. The network repository function device may be a core network device.

The AF 213 primarily supports interaction with the 3GPP core network to provide services, such as influencing data routing decisions, policy control functions, or offering some third-party services to the network side. It can be understood as a third-party server, for example, an application server on the Internet, which provides relevant service information, including delivering quality of service (QoS) requirements corresponding to the service to the PCF, and sending user plane data information of the service to the PSA-UPF. The AF can be a content provider (CP).

The AUSF 214 may also be referred to as an authentication service function network element, an authentication service function entity, an authentication service device, or an authentication device, and is mainly used for user authentication, among other purposes. The AUSF 214 can also be understood as an authentication device. The authentication service function network element is used to perform authentication, i.e., authentication between the UE and the operator network. After receiving an authentication request initiated by a subscribed user, the authentication service function network element may authenticate and/or authorize the subscribed user based on the authentication information and/or authorization information stored in the unified data management network element, or generate authentication and/or authorization information for the subscribed user through the unified data management network element. The authentication service function network element may provide feedback of the authentication information and/or authorization information to the subscribed user.

In a possible implementation, the authentication server function network element may also be co-located with the unified data management network element. In a 5G communication system, the authentication server function network element may be an authentication server function (authentication server function, AUSF) network element. In future communication systems, the unified data management may still be the AUSF, or may have other names, which is not limited in the embodiments of this application.

The NSSAAF 215 is primarily responsible for security authentication and access control of network slices. The NSSAAF 215 is configured to support authentication and authorization for a specific network slice with an authentication authorization accounting (AAA) server (server) or an AAA proxy, and to support access to an SNPN using credentials from a credentials holder (CH) who uses the AAA server for authentication.

The AAA server 216 may also be referred to as an authentication, authorization, and accounting (AAA) server, an authentication, authorization, and accounting (AAA) device, an authentication device, an authentication, authorization, and accounting (AAA) billing device, or the like. It is a server program capable of processing user access requests and providing authentication, authorization, and account services. The AAA server 216 typically works in conjunction with network access control, gateway servers, databases, and user information directories, among others. The network connection server interface that collaborates with the AAA server 216 is the Remote Authentication Dial-In User Service (RADIUS).

The AMF 205 or the SMF 206 exchanges information with the NSACF 207, NSSF 208, UDM 209, NEF 210, NRF 211, AF 213, AUSF 214, and NSSAAF 215 through different interfaces. The UE 201 can authenticate access to the SNPN 200 via the AAA server 216 of the CH.

FIG. 3 is a schematic block diagram of an SNPN 300. The SNPN 300 in FIG. 3 includes a UE 301, a RAN 302, a UPF 303, a DN 304, an AMF 305, an SMF 306, an NSACF 307, an NSSF 308, an NEF 309, an NRF 310, a PCF 311, and an AF 312. The CH includes an NSSAAF 314, a UDM 315, an NRF 316, and an AUSF 317. Some of the network elements in the SNPN 300 exchange information with some of the network elements in the CH through a security edge protection proxy (SEPP). The UE 301 in FIG. 3 is authenticated and gains access to the SNPN 300 through the AUSF 317 and UDM 315 in the CH. The network elements or devices in FIG. 3 are similar to the corresponding network elements or devices in FIG. 2, and therefore, no further details will be provided here.

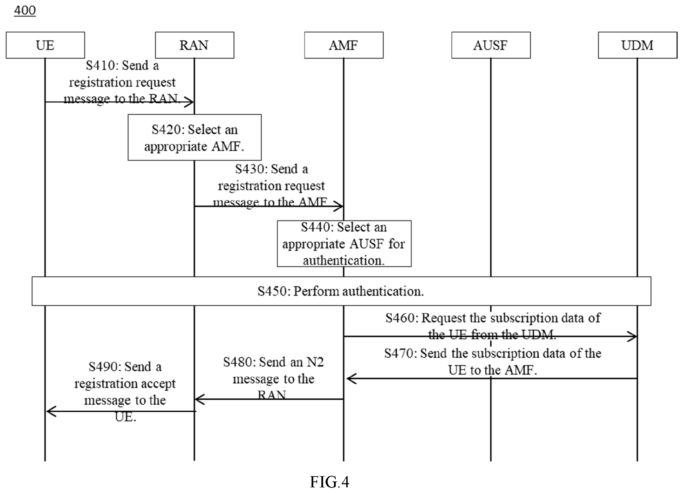

FIG. 4 is a schematic flowchart of a registration method for a terminal device. The UE in FIG. 4 is similar to the terminal device 110 in FIG. 1, the RAN in FIG. 4 is similar to the access network device 120 in FIG. 1, the AMF in FIG. 4 is similar to the access and mobility management device 130 in FIG. 1, the AUSF in FIG. 4 is similar to the AUSF 214 in FIG. 2, the UDM in FIG. 4 is similar to the UDM 209 in FIG. 2. The method in FIG. 4 includes the following steps.

S410: Send a registration request message to the RAN.

The UE sends a registration request message to the RAN, where the registration request message includes a registration type (registration type) and identification information of the terminal device. The identification information of the terminal device includes any one of the following: SUCI, 5G globally unique temporary identifier (5G-GUTI), or permanent equipment identity (PEI).

Optionally, the registration request message further includes a local area data network (local area data network, LADN) data network name (data network name, DNN) requested to be used by the terminal device.

Optionally, the registration type includes the following types:
(1) Initial registration (initial registration): a registration procedure initiated when the UE is in a deregistered state.
(2) Mobility registration update (mobility registration update): a registration procedure initiated when the UE needs to initiate a registration procedure due to mobility.
(3) Periodic registration update (periodic registration update): a registration procedure initiated when the UE is in a registered state and a periodic registration update timer expires.
(4) Emergency registration: A registration procedure initiated when the UE is in a service-restricted state.

For the identification information of the UE, when the UE has a valid 5G-GUTI, the 5G-GUTI is carried in the registration request. The 5G-GUTI is a temporary identity allocated by an AMF serving the UE. If the UE does not have a valid 5G-GUTI, the SUCI is carried. In an emergency registration, if the UE does not have a valid 5G-GUTI or a permanent subscriber identifier (subscription permanent identifier, SUPI), the PEI is carried. The UE does not have a valid SUPI indicates that the UE does not have a SUCI, where the SUCI is an encrypted SUPI.

S420: Select an appropriate AMF.

The RAN selects an appropriate AMF based on the received registration request message.

S430: Send a registration request message to the AMF.

The RAN forwards the registration request message sent by the UE to the AMF.

S440: Select an appropriate AUSF for authentication.

The AMF selects an appropriate AUSF for performing a security procedure such as authentication.

S450: Perform authentication.

The UE, AMF, AUSF, UDM, and the like interact to complete a security procedure such as authentication.

S460: Request subscription data of the UE from the UDM.

After the UE and the network side successfully authenticate each other, the AMF interacts with the UDM to obtain the subscription data of the UE. The AMF sends a request message to the UDM, to request the UDM to deliver the subscription data.

S470: Send the subscription data of the UE to the AMF.

After receiving the request from the AMF, the UDM sends the subscription data of the UE to the AMF.

S480: Send an N2 message to the RAN.

The AMF sends an N2 message to the RAN through an N2 interface, where the N2 message includes a non-access stratum (NAS) message. The NAS message includes a registration accept message. The registration accept message includes the LADN DNN information requested by the UE or the DNN information subscribed by the UE.

S490: Send a registration accept message to the UE.

The RAN forwards the NAS message sent by the AMF to the UE, where the NAS message includes the registration accept message.

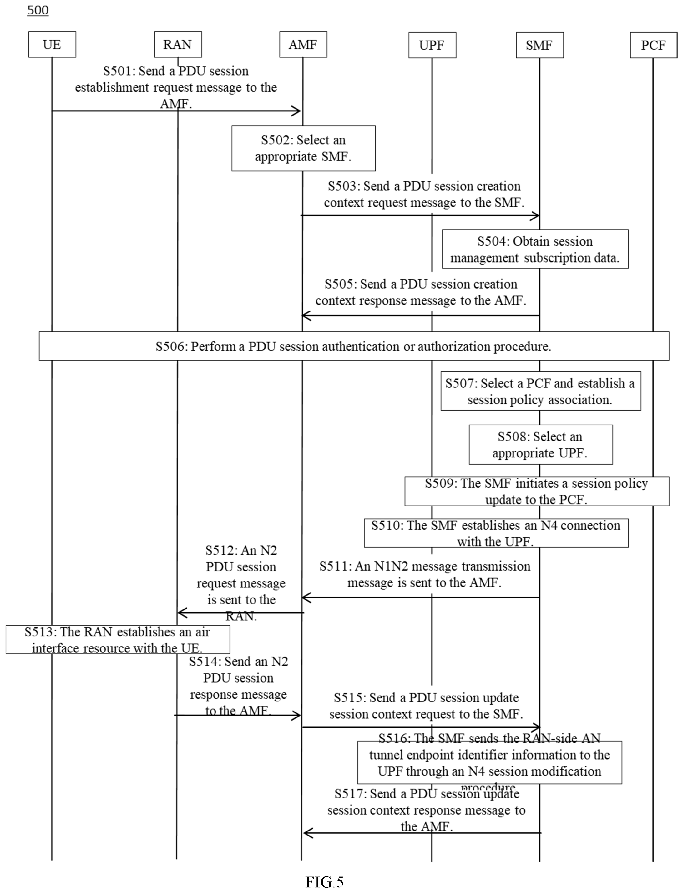

FIG. 5 is a schematic flowchart of a session establishment method for a terminal device. The UE in FIG. 5 is similar to the terminal device 110 in FIG. 1, the RAN in FIG. 5 is similar to the access network device 120 in FIG. 1, the AMF in FIG. 5 is similar to the access and mobility management device 130 in FIG. 1, the SMF in FIG. 5 is similar to the session management device 140 in FIG. 1, the PCF in FIG. 5 is similar to the policy management device 150 in FIG. 1. The UPF in FIG. 5 is similar to the UPF 203 in FIG. 2. The method in FIG. 5 includes the following steps.

S501: Send a PDU session establishment request message to the AMF.

The UE sends a PDU session establishment request (PDU session establishment request) message to the AMF. The PDU session establishment request message is a NAS message. The PDU session establishment request message carries parameters such as a PDU session identifier (session identification, session ID), a request type (request type), a data network name requested by the UE (UE requested DNN), and single network slice selection assistance information (single network slice selection assistance information, S-NSSAI). When the request type is an LADN PDU request (request), the PDU session establishment request is used to request establishment of an LADN session. The DNN is an LADN DNN corresponding thereto.

S502: Select an appropriate SMF.

The AMF selects an appropriate SMF based on the received PDU session establishment request message.

S503: Send a PDU session creation context request message to the SMF.

The AMF sends a PDU session creation context request message to the SMF, where the PDU session creation context request message includes parameters such as a SUPI of the UE, an LADN DNN requested by the UE, a PDU session identifier, and an LADN PDU request.

S504: Obtain subscription data for session management.

The SMF obtains session management subscription data from the UDM, where the subscription data may include information indicating whether establishment of a local area network session (LADN PDU session) is allowed. Step S504 is an optional step, that is, step S504 may not be performed.

S505: Send a PDU session creation session context response message to the AMF. The SMF feeds back the PDU session establishment session context response message to the AMF.

S506: Perform a PDU session authentication or authorization procedure. Step S506 is an optional step, that is, step S506 may not be performed.

S507: Select a PCF, and establish a session policy association.

If dynamic policy control and charging (policy and charging control, PCC) rules are required, the SMF selects the PCF and establishes a session policy association. Step S507 is an optional step, that is, step S507 may not be performed.

Specifically, the SMF sends a session management (session management, SM) policy association establishment request message (policy association establishment request) to the PCF, and the PCF sends an SM policy association establishment response message (policy association establishment response) to the SMF.

S508, Select an appropriate UPF. The SMF selects an appropriate UPF.

S509: The SMF initiates a session policy update to the PCF.

If the PCF has subscribed to events from the SMF, such as changes in the UE's time zone or location, the SMF may report the change information to the PCF, and the PCF can dynamically update the session policy of the UE based on the reported events. Step S509 is an optional step, meaning that step S509 may not necessarily be performed.

S510: The SMF establishes an N4 connection with the UPF.

Specifically, the SMF sends an N4 rule to the UPF, where the N4 rule includes a packet detection rule (packet detection rule, PDR), a forwarding action rule (forwarding action rule, FAR), and the like.

S511. Send an N1N2 message transfer message to the AMF.

The SMF sends an N1N2 message transfer message (Namf_Communication_N1N2MessageTransfer) to the AMF, where the N1N2 message transfer message includes information such as a session identifier, N2 interface session management information (N2 SM information), and N1 interface session management container (N1 SM container). The SMF sends the N2 SM information to the RAN by using the AMF, where the N2 SM information includes information such as a tunnel endpoint identifier of the UPF, and the tunnel endpoint identifier information is used to indicate a destination address of uplink data. The SMF sends information in the N1 SM container to the UE by using the AMF. Specifically, the AMF sends a NAS message to the UE, where the NAS message includes the information in the N1 SM container.

S512: Send an N2 PDU session request message to the RAN.

The AMF sends an N2 PDU session request message to the RAN, where the N2 PDU session request message includes N2 SM information and a NAS message that needs to be sent to the UE. The NAS message includes a session identifier and an N1 SM container.

S513: The RAN establishes an air interface resource with the UE.

The RAN establishes an air interface resource with the UE, and the RAN sends the NAS message to the UE. The NAS message includes a PDU session establishment accept message.

S514: Send an N2 PDU session response message to the AMF.

The RAN sends an N2 PDU session response message to the AMF, where the N2 PDU session response message includes tunnel endpoint identifier information on the RAN side, and the tunnel endpoint identifier information is used to indicate a destination address of downlink data. The tunnel endpoint identifier information is subsequently sent to the UPF through the AMF and the SMF.

S515: Send a PDU session update session context request to the SMF.

The AMF sends the message sent by the RAN to the SMF through the PDU session update session context request.

S516: The SMF sends the RAN-side AN tunnel endpoint identifier information to the UPF through an N4 session modification procedure. The UPF sends a response message to the SMF, and the SMF confirms that the session update is complete.

S517: Send a PDU session update session context response message to the AMF. The SMF sends a PDU session update session context response message to the AMF.

In the communication methods shown in FIG. 4 and FIG. 5, a prerequisite for the terminal device to access the target network is that the terminal device has subscription data of the target network, or there is an external authentication protocol between the home network of the terminal device and the target network. When the subscription data of the terminal device does not belong to the target network, and there is no external authentication protocol between the home network of the terminal device and the target network, the terminal device can access the target network only by performing emergency registration, thereby obtaining an emergency service, for example, making an emergency call. Therefore, an embodiment of this application provides a communication method, where when the subscription data of the terminal device does not belong to the target network, and there is no external authentication protocol between the home network of the terminal device and the target network, the terminal device can access the target network as a temporary UE and obtain a service. In some embodiments, the target network may further impose restrictions on the temporary UE, so that the service obtained by the temporary UE is different from that obtained by a normal UE, or so that the service obtained by the temporary UE is less than that obtained by the normal UE. The subscription data of the normal UE belongs to the target network, or there is an external authentication protocol between the home network of the normal UE and the target network.

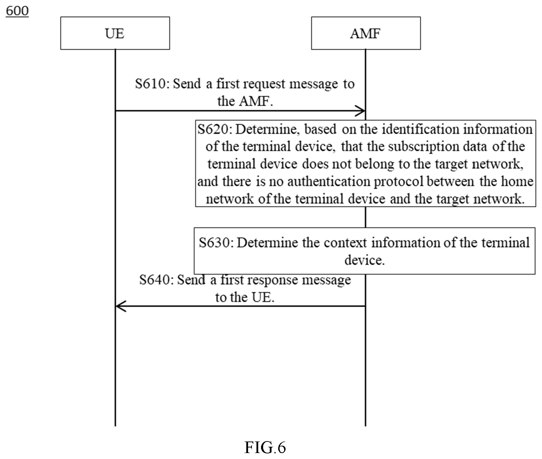

FIG. 6 is a schematic flowchart of a communication method according to an embodiment of this application. The method in FIG. 6 is applied to the communication system 100 shown in FIG. 1, or is applied to the SNPN in FIG. 2 or FIG. 3. The UE in FIG. 6 is similar to the terminal device 110 in FIG. 1, and the AMF in FIG. 6 is similar to the access and mobility management device 130 in FIG. 1. The method in FIG. 6 includes the following steps.

S610. Send a first request message to an AMF.

The terminal device sends the first request message to the AMF, and correspondingly, the AMF receives the first request message from the terminal device. The first request message includes identification information of the terminal device. The first request message is used to request the terminal device to access the target network.

In some embodiments, the target network is an NPN network. The identification information of the terminal device includes an SUCI of the terminal device.

In some embodiments, the terminal device sends the first request message to a RAN, and the RAN forwards the first request message to the AMF. The RAN is similar to the access network device 120 in FIG. 1.

In some embodiments, the first request message is a registration request message.

In some embodiments, the terminal device sends the AN parameter and the registration request message to the RAN.

S620: Determine, based on the identification information of the terminal device, that the subscription data of the terminal device does not belong to the target network, and there is no external authentication protocol between the home network of the terminal device and the target network.

After receiving the first request message, the AMF determines, based on the identification information of the terminal device, whether the subscription data of the terminal device belongs to the target network, and if not, determines whether there is an external authentication protocol between the home network of the terminal device and the target network.

When the subscription data of the terminal device belongs to the target network, or when there is an external authentication protocol between the home network of the terminal device and the target network, the AMF performs the registration procedure in FIG. 4, and sends a fifth response message to the terminal device, where the fifth response message is used to indicate that the terminal device is allowed to access the target network.

In some embodiments, the AMF sends the fifth response message to the RAN, and the RAN forwards the fifth response message to the terminal device.

When the subscription data of the terminal device does not belong to the target network, and there is no external authentication protocol between the home network of the terminal device and the target network, the AMF performs steps S630 and S640.

Optionally, the AMF determines, based on the identification information of the terminal device, whether the subscription data of the terminal device belongs to the target network. When determining that the subscription data of the terminal device does not belong to the target network, the AMF queries an AUSF and/or a UDM in the home network of the terminal device, or queries an AAA server in the home network of the terminal device, based on the information about the home network included in the identification information of the terminal device. If an AUSF and/or a UDM corresponding to the target network are found, it indicates that there is an external authentication protocol between the home network of the terminal device and the target network. If an AUSF and/or a UDM corresponding to the target network are not found, it indicates that there is no external authentication protocol between the home network of the terminal device and the target network. Similarly, if an AAA server corresponding to the target network is found, it indicates that there is an external authentication protocol between the home network of the terminal device and the target network. If an AAA server corresponding to the target network is not found, it indicates that there is no external authentication protocol between the home network of the terminal device and the target network.

S630: Determine the context information of the terminal device.

When the subscription data of the terminal device does not belong to the target network, and there is no external authentication protocol between the home network of the terminal device and the target network, the AMF determines the context information of the terminal device. The context information of the terminal device includes the first indication information. The first indication information is used to indicate that the terminal device accesses the target network without authentication.

In some embodiments, the AMF creates context information for the terminal device, and sets the first indication information in the context information of the terminal device. The first indication information includes at least one bit.

For example, when the context information of the terminal device includes the first indication information, it indicates that the terminal device is allowed to access the target network and obtain some services provided by the target network.

For example, the some services provided by the target network include an emergency service and another service other than the emergency service.

For example, the first terminal device and the second terminal device are allowed to obtain different services after accessing the target network. Alternatively, the first terminal device is allowed to obtain fewer services after accessing the target network than the second terminal device is allowed to obtain after accessing the target network. The subscription data of the first terminal device does not belong to the target network, and there is no external authentication protocol between the home network of the first terminal device and the target network. The subscription data of the second terminal device belongs to the target network, or there is an external authentication protocol between the home network of the second terminal device and the target network.

In some embodiments, after determining the context information of the terminal device, the AMF stores the context information of the terminal device.

In some embodiments, the AMF determines an available session parameter of the terminal device. The available session parameter of the terminal device is used by the terminal device to request to obtain a service provided by the target network.

For example, the available session parameter of the terminal device includes network slice information and/or DNN information.

For example, the AMF preconfigures the session parameter available to the first terminal device, and determines that the session parameter available to the terminal device is the session parameter available to the first terminal device.

For example, after determining the session parameter available to the terminal device, the AMF stores the session parameter available to the terminal device.

Optionally, when the first service exists in the target network, the AMF determines the context information of the terminal device, where the context information includes the first indication information. When the first service does not exist in the target network, the AMF sends a second response message to the terminal device, where the second response message is used to indicate that the terminal device is not allowed to access the target network. The first service is a service that the first terminal device is allowed to obtain.

Optionally, when the time at which the first request message is received belongs to the target time period, the AMF determines the context information of the terminal device, where the context information includes the first indication information. When the time at which the first request message is received does not belong to the target time period, the AMF sends a second response message to the terminal device, where the second response message is used to indicate that the terminal device is not allowed to access the target network. That is, when the time at which the first request message is received does not belong to the target time period, the AMF may not determine the context information of the terminal device. The target time period includes a time at which the first service in the target network is allowed to be obtained.

In some embodiments, the target time period is information preconfigured by the AMF.

For example, it is assumed that the time period during which the first service provided by the target network is allowed to be obtained is 10:00-20:00, then the target time period is 10:00-20:00. When the AMF receives the first request message within the target time period and the first service exists in the target network, the AMF determines the context message of the terminal device, where the context message includes the first indication information. When the AMF receives the first request message at a time outside the target time period, or when the first service does not exist in the target network, the AMF sends the second response message to the terminal device.

In some embodiments, the AMF sends the second response message to the RAN, and the RAN forwards the second response message to the terminal device.

S640: Send a first response message to the UE.

When the subscription data of the terminal device does not belong to the target network, and there is no external authentication protocol between the home network of the terminal device and the target network, the AMF sends the first response message to the terminal device. Correspondingly, the terminal device receives the first response message. The first response message is used to indicate that the terminal device is allowed to access the target network.

In some embodiments, the first response message includes first indication information and/or a session parameter available to the terminal device. The first indication information is used to indicate that the terminal device accesses the target network without authentication.

In some embodiments, the AMF sends the first response message to the RAN, and the RAN forwards the first response message to the terminal device.

In some embodiments, the first response message is a registration accept message.

Optionally, when the first service exists in the target network, the AMF sends the first response message to the terminal device. When the first service does not exist in the target network, the AMF sends a second response message to the terminal device, where the second response message is used to indicate that the terminal device is not allowed to access the target network. The first service is a service that the first terminal device is allowed to obtain.

Optionally, when the time at which the first request message is received falls within the target time period, the AMF sends the first response message to the terminal device. When the time at which the first request message is received does not fall within the target time period, the AMF sends a second response message to the terminal device, where the second response message is used to indicate that the terminal device is not allowed to access the target network. The target time period includes a time at which the first service in the target network is allowed to be obtained.

For example, assuming that the time period during which the first service provided by the target network is allowed to be obtained is from 10:00 to 20:00, then the target time period is from 10:00 to 20:00. When the AMF receives the first request message within the target time period and the first service exists in the target network, the AMF sends the first response message to the terminal device. When the AMF receives the first request message at a time outside the target time period or when the first service does not exist in the target network, the AMF sends the second response message to the terminal device.

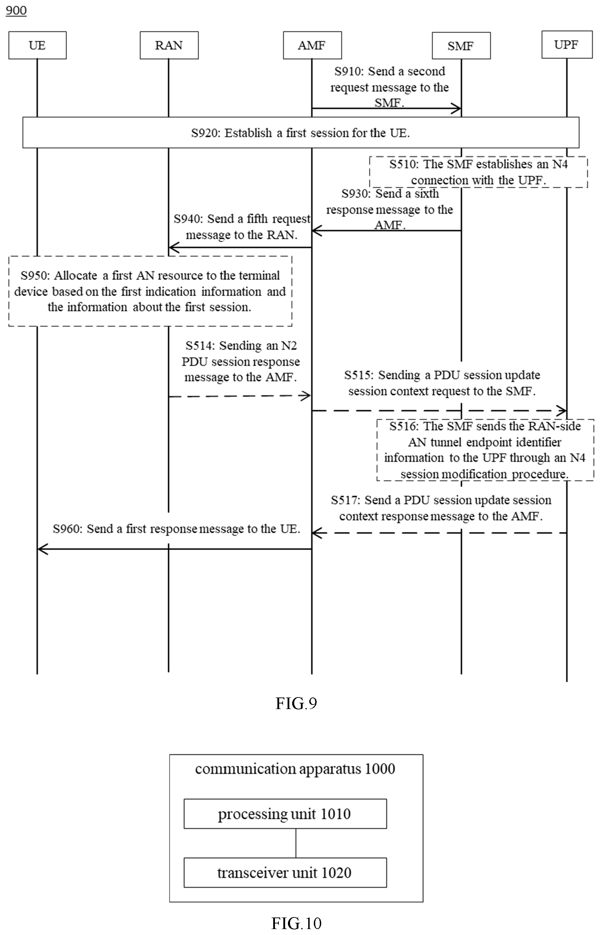

Optionally, before sending the first response message to the terminal device, the AMF sends a second request message to the SMF. The second request message is used to request to establish the first session for the terminal device. The SMF is similar to the session management device 140 in FIG. 1. For details, refer to the method in FIG. 9.

The AMF in FIG. 6 may determine, based on the identification information of the terminal device, whether the subscription data of the terminal device belongs to the target network, and determine whether an external authentication protocol exists between the home network of the terminal device and the target network. If the subscription data of the terminal device does not belong to the target network, and there is no external authentication protocol between the home network of the terminal device and the target network, the AMF determines the context information of the terminal device, and sets the first indication information in the context information, so as to indicate that the terminal device is allowed to access the target network without authentication to obtain some services provided by the target network.

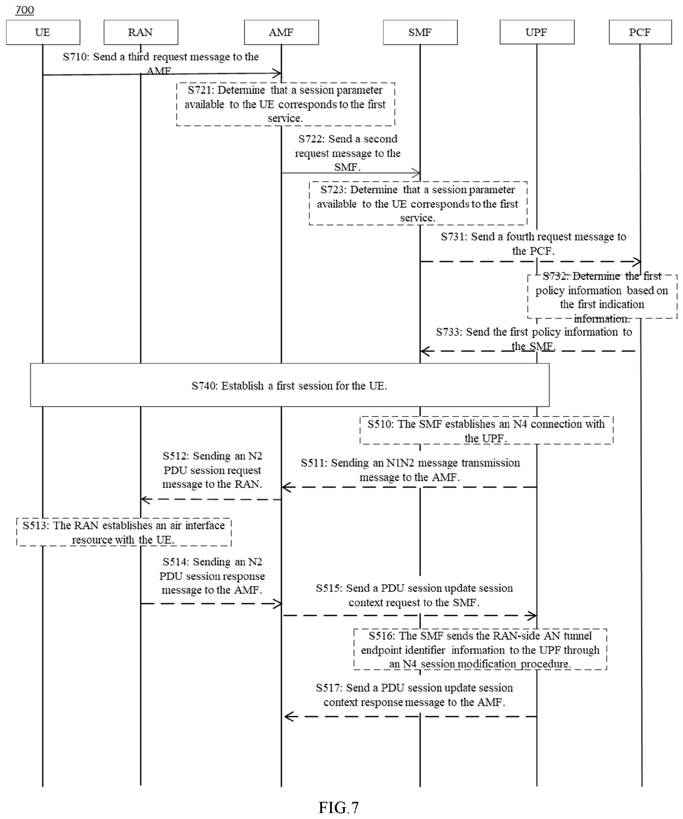

Optionally, after step S640, the method in FIG. 7 may continue to be performed.

FIG. 7 is a schematic flowchart of a communication method according to an embodiment of this application. The method in FIG. 7 is applied to the communication system 100 shown in FIG. 1, or is applied to the SNPN in FIG. 2 or FIG. 3. The UE in FIG. 7 is similar to the terminal device 110 in FIG. 1, the RAN in FIG. 7 is similar to the access network device 120 in FIG. 1, the AMF in FIG. 7 is similar to the access and mobility management device 130 in FIG. 1, the SMF in FIG. 7 is similar to the session management device 140 in FIG. 1, the UPF in FIG. 7 is similar to the UPF 203 in FIG. 2, and the PCF in FIG. 7 is similar to the policy management device 150 in FIG. 1. The method in FIG. 7 includes the following steps.

S710: Send a third request message to an AMF.

After receiving the first response message in step S640, the terminal device sends the third request message to the AMF. Correspondingly, the AMF receives the third request message. The subscription data of the terminal device does not belong to the target network, and there is no external authentication protocol between the home network of the terminal device and the target network. The third request message is used to request to establish a first session for the terminal device. The first session is used by the terminal device to obtain a second service, where the second service belongs to a service that is allowed to be obtained by a first terminal device in the target network. The subscription data of the first terminal device does not belong to the target network, and there is no external authentication protocol between the home network of the first terminal device and the target network.

For example, the first service includes at least one service, and the at least one service includes the second service.

In some embodiments, the target network is an NPN network.

In some embodiments, the terminal device sends a third request message to the RAN, and the RAN sends the third request message to the AMF.

In some embodiments, the third request message is a session establishment request message.

For example, the third request message is similar to the PDU session establishment request message in step S501.

In some embodiments, the third request message includes the first indication information and/or a session parameter available to the terminal device. The first indication information is used to indicate that the terminal device accesses the target network without authentication. The session parameter available to the terminal device is used by the terminal device to request to obtain a service provided by the target network.

For example, the session parameter available to the terminal device includes network slice information and/or DNN information.

S721: Determine that a session parameter available to the UE corresponds to the second service.

After receiving the third request message, the AMF determines, based on the session parameter available to the terminal device, whether the available session parameter corresponds to the second service.

In some embodiments, the AMF obtains the session parameter available to the terminal device through the third request message. Alternatively, the AMF obtains the session parameter available to the terminal device through stored information. That is, the AMF has stored the session parameter available to the terminal device.

Optionally, the AMF determines, based on the session parameter available to the terminal device, a service corresponding to the available session parameter, and determines whether the service corresponding to the available session parameter is a second service in the target network. When the service corresponding to the available session parameter is the second service in the target network, the available session parameter of the terminal device corresponds to the second service. When the service corresponding to the available session parameter is not the second service in the target network, the available session parameter of the terminal device does not correspond to the second service.

When the session parameter available to the terminal device corresponds to the second service, the AMF performs step S722.

When the session parameter available to the terminal device does not correspond to the second service, the AMF sends a third response message to the terminal device, where

the third response message is used to indicate that the first session cannot be established for the terminal device.

Optionally, step S721 is an optional step. After the AMF completes step S721, the AMF performs step S722, and the SMF no longer performs step S723. Alternatively, when the AMF does not perform step S721, the AMF directly performs step S722, and the SMF performs step S723. In other words, both the AMF and the SMF may determine whether the session parameter available to the terminal device corresponds to the second service, but only one of the AMF and the SMF needs to perform the determining, and there is no need for both the AMF and the SMF to perform the determining.

S722: Send a second request message to the SMF.

The AMF sends the second request message to the SMF, and correspondingly, the SMF receives the second request message. The second request message is used to request to establish the first session for the terminal device.

In some embodiments, the second request message includes the first indication information and/or the session parameter available to the terminal device.

In some embodiments, the second request message is a session establishment request message.

When the third request message includes the first indication information and/or the session parameter available to the terminal device, the AMF may directly send the third request message to the SMF as the second request message. Alternatively, after performing step S721, the AMF may send the third request message to the SMF as the second request message.

When the third request message does not include the first indication information and/or the session parameter available to the terminal device, the AMF may directly add the first indication information and/or the session parameter available to the terminal device to the third request message to generate the second request message, and then send the second request message to the SMF. Alternatively, after performing step S721, the AMF may add the first indication information and/or the session parameter available to the terminal device to the third request message to generate the second request message, and then send the second request message to the SMF.

S723: Determine that the session parameter available to the UE corresponds to the second service.

After receiving the second request message, the SMF determines, based on the session parameter available to the terminal device, whether the available session parameter corresponds to the second service.

In some embodiments, the SMF obtains the session parameter available to the terminal device by using the second request message. Alternatively, the SMF obtains the session parameter available to the terminal device by using stored information. That is, the SMF has stored the session parameter available to the terminal device.

For example, the SMF preconfigures the session parameter available to the first terminal device, and uses the session parameter available to the first terminal device as the session parameter available to the terminal device.

Optionally, the SMF determines, based on the session parameter available to the terminal device, a service corresponding to the available session parameter, and determines whether the service corresponding to the available session parameter is the second service in the target network. When the service corresponding to the available session parameter is the second service in the target network, the available session parameter of the terminal device corresponds to the second service. When the service corresponding to the available session parameter is not the second service in the target network, the available session parameter of the terminal device does not correspond to the second service.

When the session parameter available to the terminal device corresponds to the second service, the SMF performs step S740.

When the session parameter available to the terminal device does not correspond to the second service, the SMF sends a fourth response message to the terminal device, where the fourth response message is used to indicate that the first session cannot be established for the terminal device.

In some embodiments, the fourth response message may further include a session parameter of a session parameter of a service that the terminal device is allowed to obtain. For example, the fourth response message further includes the session parameter corresponding to the second service.

In some embodiments, the SMF sends the fourth response message to the AMF, and the AMF sends the fourth response message to the terminal device through the RAN.

Optionally, step S723 is an optional step. When the AMF has performed step S721, the SMF does not perform step S723. When the AMF has not performed step S721, the SMF performs step S723.

S731: Send a fourth request message to the PCF.

When the session parameter available to the terminal device corresponds to the second service, the SMF sends the fourth request message to the PCF, and correspondingly, the PCF receives the fourth request message. The fourth request message is used to request the first policy information, and the fourth request message includes the first indication information.

S732: Determine the first policy information based on the first indication information.

After receiving the fourth request message, the PCF determines the first policy information based on the first indication information in the fourth request message. The first policy information is used to generate first QoS information, where the first QoS information is used to indicate a QoS requirement of a first session, and the QoS requirement of the first session is lower than a QoS requirement corresponding to the second service obtained by the second terminal device. The subscription data of the second terminal device belongs to the target network, or there is an external authentication protocol between the home network of the second terminal device and the target network.

For example, the QoS requirement of the first session includes any one or more of a first bandwidth, a first packet loss rate, and a first delay. The first bandwidth is lower than the bandwidth corresponding to the second service obtained by the second terminal device. The first packet loss rate is higher than the packet loss rate corresponding to the second service obtained by the second terminal device. The first delay is greater than the delay corresponding to the second service obtained by the second terminal device.

In some embodiments, the PCF preconfigures the policy information corresponding to the service obtained by the first terminal device in the target network, so as to determine the first policy information based on the preconfigured policy information and the first indication information.

S733: Send the first policy information to the SMF.

The PCF sends the first policy information to the SMF, and correspondingly, the SMF receives the first policy information.

S740: Establish a first session for the UE.

The SMF establishes the first session for the terminal device based on the first QoS information. The first QoS information is generated based on the first policy information.

In some embodiments, the SMF obtains the first policy information based on steps S731 to S733. Alternatively, the SMF preconfigures policy information corresponding to the service obtained by the first terminal device in the target network, so as to determine the first policy information based on the preconfigured policy information and the first indication information. In other words, steps S731, S732, and S733 are optional steps and may not be performed.

Optionally, after step S740, step S510 to step S517 in FIG. 5 may be performed.

When the subscription data of the terminal device does not belong to the target network, and there is no external authentication protocol between the home network of the terminal device and the target network, the method in FIG. 7 allows the terminal device to access the target network without authentication, obtain some services provided by the target network, and allocate a lower QoS parameter to a session corresponding to the terminal device, so that the terminal device is restricted when obtaining the service and fewer resources are occupied.

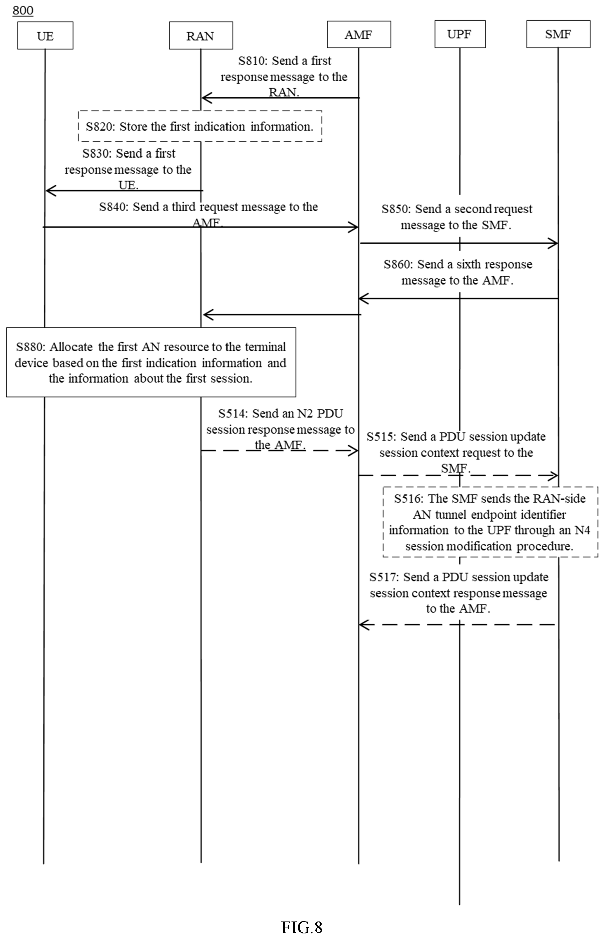

Optionally, after step S630, the method in FIG. 8 may continue to be performed. Alternatively, step S640 may be replaced with steps S810, S820, and S830 in FIG. 8. Alternatively, after step S740 in FIG. 7, steps S860, S870, and S880 in FIG. 8 may continue to be performed. Alternatively, after step S740 and step S510, steps S860, S870, and S880 in FIG. 8 may continue to be performed. Alternatively, after step S740, steps S510 to S512 in FIG. 5, step S880 in FIG. 8, and steps S514 to S517 in FIG. 5 may continue to be performed.

FIG. 8 is a schematic flowchart of a communication method according to an embodiment of this application. The method in FIG. 8 is applied to the communication system 100 shown in FIG. 1, or is applied to the SNPN in FIG. 2 or FIG. 3. The UE in FIG. 8 is similar to the terminal device 110 in FIG. 1, the RAN in FIG. 8 is similar to the access network device 120 in FIG. 1, the AMF in FIG. 8 is similar to the access and mobility management device 130 in FIG. 1, the UPF in FIG. 8 is similar to the UPF 203 in FIG. 2, the SMF in FIG. 8 is similar to the session management device 140 in FIG. 1. The method in FIG. 8 includes the following steps.

S810: Send a first response message to the RAN.

When the subscription data of the terminal device does not belong to the target network, and there is no external authentication protocol between the home network of the terminal device and the target network, the AMF sends the first response message to the RAN, and correspondingly, the RAN receives the first response message. For the first response message and the target network, refer to the descriptions in step S640.

S820: Store the first indication information.

Optionally, after receiving the first indication information, the RAN stores the first indication information. For the first indication information, refer to the description in step S630. This step S820 is an optional step, that is, step S820 may not be performed.

In some embodiments, the first response message includes the first indication information. In other words, after receiving the first response message, the RAN stores the first indication information in the first response message.

In some embodiments, the first response message does not include the first indication information. In other words, after receiving the first response message, the RAN receives the first indication information from the AMF, so as to store the first indication information.

S830: Send a first response message to the UE.

The RAN forwards the first response message to the UE, and correspondingly, the UE receives the first response message.

S840: Send a third request message to the AMF. An implementation of step S840 is similar to that of step S710, and details are not described herein again.

S850: Send a second request message to the SMF. An implementation of step S850 is similar to that of step S722, and details are not described herein again.

Optionally, referring to the description of step S722 in FIG. 7, step S721 may be performed before step S850, or step S723 may be performed after step S850.

Optionally, when the session parameter available to the terminal device corresponds to the second service, after receiving the second request message, the SMF sends an N4 session establishment request (N4 session establishment request) message to the UPF. This UPF is similar to the UPF 203 in FIG. 2. After receiving the N4 session establishment request message, the UPF sends an N4 session establishment response message to the SMF. The N4 session establishment response message includes core network tunnel information (core network tunnel information).

S860: Send a sixth response message to the AMF.

When the session parameter available to the terminal device corresponds to the second service, the SMF sends the sixth response message to the AMF, and correspondingly, the AMF receives the sixth response message. The sixth response message is used to indicate that a first session may be established for the terminal device. For the first session, refer to the description in S710.

In some embodiments, the sixth response message is a session establishment response message. Optionally, the sixth response message includes core network tunnel information (core network tunnel information).

For example, the sixth response message is similar to the N1N2 message transmission message in step S511.

S870: Send a fifth request message to the RAN.

After receiving the sixth response message, the AMF sends the fifth request message to the RAN. Correspondingly, the RAN receives the fifth request message. The fifth request message includes information about the first session.

In some embodiments, the fifth request message is an N2 PDU session request message. The N2 PDU session request message includes N2 SM information and a NAS message, where the NAS message includes a session identifier and an N1 SM Container.

In some embodiments, the fifth request message further includes the first indication information.

S880: Allocate the first AN resource to the terminal device based on the first indication information and the information about the first session.

After receiving the fifth request message, the RAN allocates the first AN resource to the terminal device based on the first indication information and the information about the first session in the fifth request message.

In some embodiments, the first AN resource is less than an AN resource corresponding to the second terminal device. The first AN resource includes a physical resource and/or a logical resource corresponding to the terminal device. The subscription data of the second terminal device belongs to the target network, or there is an external authentication protocol between the home network of the second terminal device and the target network.

In some embodiments, the RAN obtains the first indication information by performing step S820. Alternatively, the RAN obtains the first indication information by using the fifth request message, that is, the fifth request message includes the first indication information.

Optionally, after step S880, steps S514 to S517 in FIG. 5 may be performed.

When the subscription data of the terminal device does not belong to the target network, and there is no external authentication protocol between the home network of the terminal device and the target network, the method in FIG. 8 allows the terminal device to access the target network without authentication, obtain some services provided by the target network, and allocate a relatively low AN resource to the terminal device, so that the terminal device is restricted when obtaining the service and occupies fewer resources.

Optionally, after step S630, the method in FIG. 9 may be performed.

FIG. 9 is a schematic flowchart of a communication method according to an embodiment of this application. The method in FIG. 9 is applied to the communication system 100 shown in FIG. 1, or is applied to the SNPN in FIG. 2 or FIG. 3. The UE in FIG. 9 is similar to the terminal device 110 in FIG. 1, the RAN in FIG. 9 is similar to the access network device 120 in FIG. 1, the AMF in FIG. 9 is similar to the access and mobility management device 130 in FIG. 1, the SMF in FIG. 9 is similar to the session management device 140 in FIG. 1, and the UPF in FIG. 9 is similar to the UPF 203 in FIG. 2. The method in FIG. 9 includes the following steps.

S910: Send a second request message to the SMF.

When the AMF determines that the subscription data of the terminal device does not belong to the target network, and there is no external authentication protocol between the home network of the terminal device and the target network, the AMF directly sends the second request message to the SMF. Correspondingly, the SMF receives the second request message. For the target network, refer to the description in S610. For the second request message, refer to the description in step S722.

In some embodiments, the AMF does not need to perform step S721 before performing step S910. After receiving the second request message, the SMF does not need to perform step S723.

Optionally, when the first service exists in the target network, the AMF sends the second request message to the SMF. When the first service does not exist in the target network, the AMF sends a second response message to the terminal device, where the second response message is used to indicate that the terminal device is not allowed to access the target network. The first service is a service that the first terminal device is allowed to obtain. The subscription data of the first terminal device does not belong to the target network, and there is no external authentication protocol between the home network of the first terminal device and the target network.

Optionally, when the time at which the first request message is received belongs to the target time period, the AMF sends the second request message to the SMF. When the time at which the first request message is received does not belong to the target time period, the AMF sends a second response message to the terminal device, where the second response message is used to indicate that the terminal device is not allowed to access the target network. The target time period includes a time at which the first service on the target network is allowed to be obtained.

For example, it is assumed that the time period at which the first service provided by the target network is allowed to be obtained is 10:00 to 20:00, then the target time period is 10:00 to 20:00. When the AMF receives the first request message within the target time period and the first service exists in the target network, the AMF sends the second request message to the SMF. When the AMF receives the first request message at a time outside the target time period or when the first service does not exist in the target network, the AMF sends the second response message to the terminal device.

Optionally, after receiving the second request message, the SMF may perform step S731 to step S732 in FIG. 7.

S920: Establish a first session for the UE.

In some embodiments, the SMF establishes the first session for the terminal device based on the first QoS information. In this case, a specific implementation of step S920 is similar to the implementation of step S740, and details are not described herein again.

In some embodiments, the SMF establishes the first session for the terminal device based on the second QoS information. The second QoS information is used to indicate a QoS requirement corresponding to when the second terminal device obtains the second service. The subscription data of the second terminal device belongs to the target network, or there is an external authentication protocol between the home network of the second terminal device and the target network.

Optionally, step S920 may be followed by performing step S510 in FIG. 5.

S930: Send a sixth response message to the AMF. A specific implementation of step S930 is similar to the implementation of step S860, and details are not described herein again.

S940: Send a fifth request message to the RAN. A specific implementation of step S940 is similar to the implementation of step S870, and details are not described herein again.

S950: Allocate a first AN resource to the terminal device based on the first indication information and the information about the first session. A specific implementation of step S950 is similar to the implementation of step S880, and details are not described herein again. Step S950 is an optional step, that is, step S950 may not be performed.

Optionally, after step S950, steps S514 to S517 in FIG. 5 may be performed.

S960: Send a first response message to the UE. A specific implementation of step S960 is similar to the implementation of step S640, and details are not described herein again.

When the subscription data of the terminal device does not belong to the target network, and there is no external authentication protocol between the home network of the terminal device and the target network, the method in FIG. 9 allows the terminal device to access the target network without authentication, obtain some services provided by the target network, and actively establish a session for the terminal device during the registration procedure of the terminal device. The method in FIG. 9 may also allocate a lower QoS parameter to the session corresponding to the terminal device, or allocate a lower AN resource to the terminal device, so that the terminal device is restricted when obtaining services and occupies fewer resources.

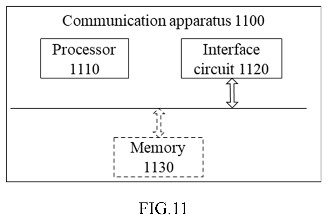

FIG. 10 and FIG. 11 are schematic structural diagrams of possible communication apparatuses according to embodiments of this application. These communication apparatuses may be configured to implement functions of the terminal device, the access network device, the access and mobility management device, and the session management device in the foregoing method embodiments, and therefore can also achieve the beneficial effects of the foregoing method embodiments. In embodiments of this application, the communication apparatus may be the terminal device 110, the access network device 120, the access and mobility management device 130, the session management device 140, or the policy management device 150 shown in FIG. 1.

As shown in FIG. 10, the communication apparatus 1000 includes a processing unit 1010 and a transceiver unit 1020. The communication apparatus 1000 is configured to implement functions of the UE, the RAN, the AMF, the SMF, or the PCF in the method embodiments shown in FIG. 6 to FIG. 9.

When the communication apparatus 1000 is configured to implement the function of the UE in the method embodiment shown in FIG. 6, the processing unit 1010 is configured to determine a first request message. The transceiver unit 1020 is configured to send the first request message to the AMF, and receive a first response message from the AMF. The transceiver unit 1020 is configured to perform step S610 in FIG. 6. The first request message and the first response message are similar to the first request message and the first response message in FIG. 6, and details are not described herein again.

In some embodiments, when the communication apparatus 1000 is configured to implement the function of the AMF in the method embodiment shown in FIG. 6, the transceiver unit 1020 is configured to receive the first request message. The processing unit 1010 is configured to determine, based on the identification information of the terminal device, that the subscription data of the terminal device does not belong to the target network, and there is no external authentication protocol between the home network of the terminal device and the target network. The processing unit 1010 is further configured to determine the context information of the terminal device. The processing unit 1010 is configured to perform steps S620 and S630. The transceiver unit 1020 is further configured to send the first response message to the terminal device. The transceiver unit 1020 is configured to perform step S640. The target network and the context information are similar to the target network and the context information in FIG. 6, and details are not described herein again.

In some embodiments, when the communication apparatus 1000 is configured to implement a function of the UE in the method embodiment shown in FIG. 7, the transceiver unit 1020 is configured to perform step S710.

In some embodiments, when the communication apparatus 1000 is configured to implement a function of the AMF in the method embodiment shown in FIG. 7, the processing unit 1010 is configured to perform step S721, and the transceiver unit 1020 is configured to perform step S722.

In some embodiments, when the communication apparatus 1000 is configured to implement a function of the SMF in the method embodiment shown in FIG. 7, the processing unit 1010 is configured to perform steps S723 and S740, and the transceiver unit 1020 is configured to perform step S731.

In some embodiments, when the communication apparatus 1000 is configured to implement a function of the PCF in the method embodiment shown in FIG. 7, the processing unit 1010 is configured to perform step S732, and the transceiver unit 1020 is configured to perform step S733.

In some embodiments, when the communication apparatus 1000 is configured to implement a function of the UE in the method embodiment shown in FIG. 8, the transceiver unit 1020 is configured to perform step S840.

In some embodiments, when the communication apparatus 1000 is configured to implement the functions of the RAN in the method embodiment shown in FIG. 8, the processing unit 1010 is configured to perform step S820 and step S880. The transceiver unit 1020 is configured to perform step S830.

In some embodiments, when the communication apparatus 1000 is configured to implement the functions of the AMF in the method embodiment shown in FIG. 8, the transceiver unit 1020 is configured to perform step S810, step S850, and step S870.

In some embodiments, when the communication apparatus 1000 is configured to implement the functions of the SMF in the method embodiment shown in FIG. 8, the transceiver unit 1020 is configured to perform step S860.

In some embodiments, when the communication apparatus 1000 is configured to implement the functions of the RAN in the method embodiment shown in FIG. 9, the processing unit 1010 is configured to perform step S950. The transceiver unit 1020 is configured to perform step S960.

In some embodiments, when the communication apparatus 1000 is configured to implement the functions of the AMF in the method embodiment shown in FIG. 8, the transceiver unit 1020 is configured to perform step S910 and step S940.

In some embodiments, when the communication apparatus 1000 is configured to implement the functions of the SMF in the method embodiment shown in FIG. 8, the processing unit 1010 is configured to perform step S920. The transceiver unit 1020 is configured to perform step S930.

For more detailed descriptions of the processing unit 1010 and the transceiver unit 1020, refer to related descriptions in the method embodiments shown in FIG. 6 to FIG. 9.

As shown in FIG. 11, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to store instructions executed by the processor 1110, or store input data required for the processor 1110 to run the instructions, or store data generated after the processor 1110 runs the instructions.

When the communication apparatus 1100 is configured to implement the methods shown in FIG. 6 to FIG. 9, the processor 1110 is configured to implement the functions of the processing unit 1010, and the interface circuit 1120 is configured to implement the functions of the transceiver unit 1020.

It may be understood that the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The steps of the methods disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information from the memory, and completes the steps of the foregoing methods in combination with hardware of the processor.

It is understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described in this specification is intended to include, but not limited to, these and any other memory of suitable types.

According to the method provided in the embodiments of this application, this application further provides a computer program product. The computer program product includes computer program code. When the computer program code is run on a computer, the computer is enabled to perform each step or procedure performed by the terminal device, the session management device, the access and mobility management device, or the access network device in the embodiments shown in FIG. 6 to FIG. 9.

According to the method provided in the embodiments of this application, this application further provides a computer-readable storage medium, where the computer-readable storage medium stores program code, and when the program code is run on a computer, the computer is enabled to perform each step or procedure performed by the terminal device, the session management device, the access and mobility management device, or the access network device in the embodiments shown in FIG. 6 to FIG. 9.

According to the method provided in the embodiments of this application, this application further provides a communication system, which includes the foregoing terminal device, access network device, access and mobility management device, and session management device.

According to the method provided in the embodiments of this application, this application further provides a chip, where the chip includes at least one processor. The at least one processor is configured to execute program instructions. When the program instructions are executed by the at least one processor, the chip is enabled to perform the steps or procedures performed by the terminal device, the session management device, the access and mobility management device, or the access network device in the embodiments shown in FIG. 6 to FIG. 9.

All or a part of the foregoing embodiments may be implemented through software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or a part of the procedures or functions according to the embodiments of this application are generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disc, SSD)), or the like.

The devices in the foregoing apparatus embodiments correspond completely to the devices in the method embodiments, where corresponding steps are performed by corresponding modules or units. For example, a transceiver unit (transceiver) performs steps of receiving or sending in the method embodiments, and other steps except for sending and receiving may be performed by a processing unit (processor). For specific functions of the units, refer to the corresponding method embodiments. There may be one or more processors.

The terms "component," "module," "system," and the like, as used in this specification, are used to indicate computer-related entities, hardware, firmware, combinations of hardware and software, software, or software being executed. For example, a component may be, without limitation, a process running on a processor, a processor, an object, an executable, an execution thread, a program, and/or a computer. Both an application running on a computing device and the computing device may be components through these representations. One or more components may reside within a process and/or an execution thread, and a component may be located on one computer and/or distributed between two or more computers. In addition, these components may execute from various computer-readable storage media that store various data structures. For example, the components may communicate with each other through local and/or remote processes and according to signals that carry one or more pieces of data (e.g., data from two components interacting with another component in a local system, a distributed system, and/or across a network, such as the internet interacting with another system by signaling).

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division of the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected according to an actual need to achieve the objectives of the solutions in embodiments.

In addition, functional units in embodiments of this application may be integrated into one processing unit, each of the units may exist physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The storage medium mentioned above includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A communication method, wherein the method is performed by an access and mobility management device, and the method comprises:
receiving a first request message from a terminal device, wherein the first request message comprises identification information of the terminal device, and the first request message is used to request the terminal device to access a target network;
determining, based on the identification information of the terminal device, that subscription data of the terminal device does not belong to the target network, and there is no external authentication protocol between a home network of the terminal device and the target network;
determining context information of the terminal device, wherein the context information comprises first indication information, and the first indication information is used to indicate that the terminal device accesses the target network without being authenticated;
sending a first response message to the terminal device, wherein the first response message is used to indicate that the terminal device is allowed to access the target network.

2. The communication method according to claim 1, wherein the sending a first response message to the terminal device comprises:
sending the first response message when a first service exists in the target network, wherein the first service is a service that is allowed to be obtained by a first terminal device, subscription data of the first terminal device does not belong to the target network, and there is no external authentication protocol between a home network of the first terminal device and the target network; or,
when the first service does not exist in the target network, sending a second response message, wherein the second response message is used to indicate that the terminal device is not allowed to access the target network.

3. The communication method according to claim 1 or 2, wherein the sending a first response message to the terminal device comprises:
when a time at which the first request message is received belongs to a target time period, sending the first response message, wherein the target time period comprises a time at which the first service in the target network is allowed to be obtained, the first service is a service that is allowed to be obtained by the first terminal device, the subscription data of the first terminal device does not belong to the target network, and there is no external authentication protocol between the home network of the first terminal device and the target network; or,
when a time at which the first request message is received does not belong to the target time period, sending a second response message, wherein the second response message is used to indicate that the terminal device is not allowed to access the target network.

4. The communication method according to any one of claims 1 to 3, wherein the first response message further comprises a session parameter available to the terminal device and/or the first indication information, and the session parameter is used by the terminal device to request to obtain a service provided by the target network.

5. The communication method according to any one of claims 1 to 4, wherein the method further comprises:
sending a second request message to a session management device, wherein the second request message is used to request to establish a first session for the terminal device, the first session is used by the terminal device to obtain a second service, the second service belongs to a service that is allowed to be obtained by a first terminal device in the target network, the second request message comprises the first indication information, the subscription data of the first terminal device does not belong to the target network, and there is no external authentication protocol between the home network of the first terminal device and the target network.

6. The communication method according to claim 5, wherein the sending a second request message to a session management device comprises:
receiving a third request message, wherein the third request message is used to request to establish a first session for the terminal device;
when a session parameter available to the terminal device corresponds to the second service, sending the second request message to the session management device, wherein the session parameter is used by the terminal device to request to obtain a service provided by the target network; or
when the session parameter available to the terminal device does not correspond to the second service, sending a third response message to the terminal device, wherein the third response message is used to indicate that the first session cannot be established for the terminal device.

7. The communication method according to claim 6, wherein the second request message further comprises a session parameter available to the terminal device, and/or the third request message comprises the first indication information and/or the session parameter available to the terminal device.

8. A communication method, wherein the method is performed by a session management device, and the method comprises:
receiving a second request message from an access and mobility management device, wherein the second request message is used to request to establish a first session for a terminal device, the first session is used by the terminal device to obtain a second service, the second service belongs to a service that is allowed to be obtained by a first terminal device in a target network, the second request message comprises first indication information, the first indication information is used to indicate that the terminal device accesses the target network without authentication, subscription data of each of the terminal device and the first terminal device does not belong to the target network, and no external authentication protocol exists between a home network of each of the terminal device and the first terminal device and the target network; and
establishing the first session for the terminal device based on the second request message.

9. The communication method according to claim 8, wherein the second request message further comprises a session parameter available to the terminal device, and the session parameter is used by the terminal device to request to obtain the service provided by the target network.

10. The communication method according to claim 9, wherein the establishing the first session for the terminal device based on the second request message comprises:
establishing the first session for the terminal device when the session parameter available to the terminal device corresponds to the second service; or
when the session parameter available to the terminal device does not correspond to the second service, sending a fourth response message, wherein the fourth response message is used to indicate that the first session cannot be established for the terminal device.

11. The communication method according to any one of claims 8 to 10, wherein the establishing the first session for the terminal device comprises:
establishing the first session for the terminal device based on first quality of service QoS information, wherein the first QoS information is used to indicate a QoS requirement of the first session, the QoS requirement of the first session is lower than a QoS requirement for the second service obtained by a second terminal device, the subscription data of the second terminal device belongs to the target network, or there is an external authentication protocol between a home network of the second terminal device and the target network.

12. The communication method according to claim 11, wherein the method further comprises:
sending a fourth request message to a policy management device, wherein the fourth request message is used to request first policy information, and the fourth request message comprises the first indication information;
receiving the first policy information from the policy management device, wherein the first policy information is used to generate the first QoS information.

13. A communication method, wherein the method is performed by an access network device, and the method comprises:
sending a first request message to an access and mobility management device, wherein the first request message comprises identification information of a terminal device, and the first request message is used to request the terminal device to access a target network;
receiving a first response message from the access and mobility management device, wherein the first response message is used to indicate that the terminal device is allowed to access the target network, the subscription data of the terminal device does not belong to the target network, and there is no external authentication protocol between the home network of the terminal device and the target network.

14. The communication method according to claim 13, wherein the method further comprises:
receiving a fifth request message from the access and mobility management device, wherein the fifth request message comprises information about a first session, the first session is used by the terminal device to obtain a second service, the second service belongs to a service that is allowed to be obtained by a first terminal device in the target network, the subscription data of the first terminal device does not belong to the target network, and there is no external authentication protocol between the home network of the first terminal device and the target network;
allocating, for the terminal device, a first access network AN resource based on the first indication information and the information about the first session, wherein the first AN resource is less than an AN resource corresponding to a second terminal device, the first AN resource comprises a physical resource and/or a logical resource corresponding to the terminal device, the subscription data of the second terminal device belongs to the target network, or there is an external authentication protocol between a home network of the second terminal device and the target network.

15. The communication method according to claim 14, wherein the fifth request message further comprises the first indication information.

16. The communication method according to any one of claims 13 to 15, wherein the first response message comprises first indication information and/or a session parameter available to the terminal device, the first indication information is used to indicate that the terminal device accesses the target network without authentication, and the session parameter is used by the terminal device to request to obtain a service provided by the target network.

17. The communication method according to any one of claims 13 to 16, wherein the method further comprises:
sending first indication information and/or a session parameter available to the terminal device to the terminal device, wherein the session parameter is used by the terminal device to request to obtain the service provided by the target network.

18. A communication method, wherein the method is performed by a terminal device, and the method comprises:
sending a first request message to an access network device, wherein the first request message comprises identification information of the terminal device, and the first request message is used to request the terminal device to access a target network;
receiving a first response message from the access network device, wherein the first response message is used to indicate that the terminal device is allowed to access the target network, the subscription data of the terminal device does not belong to the target network, and there is no external authentication protocol between the home network of the terminal device and the target network.

19. The communication method according to claim 18, wherein the method further comprises:
sending a third request message to the access network device, wherein the third request message is used to request to establish a first session for the terminal device, the first session is used by the terminal device to obtain a second service, the second service belongs to a service that is allowed to be obtained by a first terminal device in the target network, the subscription data of the first terminal device does not belong to the target network, and there is no external authentication protocol between the home network of the first terminal device and the target network, wherein the third request message comprises first indication information.

20. The communication method according to claim 19, wherein the method further comprises:
obtaining the second service through the first session, wherein a quality of service QoS requirement of the first session is lower than a QoS requirement corresponding to obtaining the second service by a second terminal device, the subscription data of the second terminal device belongs to the target network, or there is an external authentication protocol between the home network of the second terminal device and the target network.

21. The communication method according to claim 19 or 20, wherein the method further comprises:
transmitting data to the access network device through a first access network AN resource, wherein the first AN resource is less than an AN resource corresponding to a second terminal device, the first AN resource comprises a physical resource and/or a logical resource corresponding to the terminal device, the subscription data of the second terminal device belongs to the target network, or there is an external authentication protocol between the home network of the second terminal device and the target network.

22. The communication method according to any one of claims 18 to 21, wherein the first response message comprises first indication information and/or a session parameter available to the terminal device, the first indication information is used to indicate that the terminal device accesses the target network without authentication, and the session parameter is used by the terminal device to request to obtain a service provided by the target network.

23. A communication apparatus, comprising a unit configured to perform the communication method according to any one of claims 1 to 22.

24. A communication apparatus, wherein the communication apparatus comprises at least one processor and a communication interface, the communication interface is configured to exchange information between the communication apparatus and another communication apparatus, and when program instructions are executed by the at least one processor, the communication apparatus is enabled to perform the communication method according to any one of claims 1 to 7.

25. A communication apparatus, wherein the communication apparatus comprises at least one processor and a communication interface, the communication interface is configured to exchange information between the communication apparatus and another communication apparatus, and when program instructions are executed by the at least one processor, the communication apparatus is enabled to perform the communication method according to any one of claims 8 to 12.

26. A communication apparatus, wherein the communication apparatus comprises at least one processor and a communication interface, the communication interface is configured to exchange information between the communication apparatus and another communication apparatus, and when program instructions are executed by the at least one processor, the communication apparatus is enabled to perform the communication method according to any one of claims 13 to 17.

27. A communication apparatus, wherein the communication apparatus comprises at least one processor and a communication interface, the communication interface is configured to exchange information between the communication apparatus and another communication apparatus, and when program instructions are executed by the at least one processor, the communication apparatus is enabled to perform the communication method according to any one of claims 18 to 22.

28. A communication system, wherein the communication system comprises the communication apparatus according to claim 24, the communication apparatus according to claim 25, the communication apparatus according to claim 26, and the communication apparatus according to claim 27.

29. A computer-readable storage medium, wherein the computer-readable storage medium stores program code for execution by a device, and when the program code is executed, the communication method according to any one of claims 1 to 22 is performed.

30. A chip, wherein the chip comprises at least one processor, and when program instructions are executed by the at least one processor, the communication method according to any one of claims 1 to 22 is performed.
